# EUROPÄISCHE PATENTSCHRIFT

(11) **EP 0 986 508 B1**
(45) Veröffentlichungstag und Bekanntmachung des Hinweises auf die Patenterteilung: **30.10.2002**
(21) Anmeldenummer: 99923383.6
(22) Anmeldetag: 17.03.1999
(51) Int. Cl.: B65G 1/00

(54) **KOMMISSIONIERANLAGE MIT SCHNELLDREHAUTOMAT UND REGALBEDIENGERÄT**
COMMISSIONING SYSTEM WITH A HIGH-SPEED AUTOMATIC MACHINE AND A SHELF CONTROL UNIT
SYSTEME DE PREPARATION DES COMMANDES COMPORTANT UNE MACHINE AUTOMATIQUE A VITESSE ELEVEE ET UNE UNITE DE COMMANDE DE RAYONNAGES

(30) Priorität: 20.03.1998 DE 19812147
(43) Veröffentlichungstag der Anmeldung: 22.03.2000
(60) Teilanmeldung: 02010427.9
(73) Patentinhaber: Knapp Logistik Automation Gesellschaft MBH, 8075 Hart bei Graz (AT)
(72) Erfinder: FREUDELSPERGER, Karl, A-8075 Hart bei Graz (AT); PREISS, Manfred, D-90574 Rosstal (DE)
(74) Vertreter: Hanke, Hilmar
(86) Internationale Anmeldenummer: DE9900847
(87) Internationale Veröffentlichungsnummer: WO99047435

(56) Entgegenhaltungen:
- EP-A1- 0 794 135
- WO-A1-96/15963
- DE-A1- 4 028 059
- FR-A1- 2 630 412

## Beschreibung

Die Erfindung betrifft eine Kommissionieranlage mit zumindest einem Schnelldrehautomaten, der zumindest ein Artikelregal mit nebeneinander angeordneten, im wesentlichen senkrechten, leicht geneigten, von vorne zugänglichen Artikelschächten aufweist, in denen zu kommissionierende Artikel gelagert werden können, wobei ein dem Artikelregal zugeordnetes verfahrbares Regalbediengerät bei jedem Artikelschacht positionierbar ist und Artikel in den Artikelschacht einlagert. Die Erfindung betrifft ferner ein Verfahren zum Bereitstellen und Einlagern von Artikeln in einer Kommissionieranlage der vorgenannten Art.

Bisher werden Füllschächte von Kommissionierautomaten vorwiegend von Hand mit neuen Artikeln beschickt. Der Vorgang ist vergleichsweise kosten- und zeitaufwendig. Um Kosten und Zeit zu sparen, sieht eine bekannte Kommissioniereinrichtung ein automatisches Einlagern mittels eines Regalbediengerätes gemäß DE 297 03 230 vor, mit dessen Hilfe Artikel vom unteren Füllschachtende in einen gegenüber der Horizontalen geneigten Füllschacht eingeschoben werden können. Für senkrechte oder quasisenkrechte Füllschächte ist diese Art der Füllschachtbeschikkung nicht geeignet, da dann das gesamte Stapelgewicht im Füllschacht auflastet und dann der bereits vorhandene Stapel nach oben geschoben werden müßte.

Für senkrechte oder nahezu senkrechte von vorne zugängliche Füllschächte wird zweckmäßigerweise weiterhin der Füllschacht von oben beschickt. Um dies per Automat zweckmäßig durchführen zu können, ist gemäß EP 0 794 135 vorgesehen, nicht nur einen Einzel-Artikel, sondern gleich einen ganzen Artikelstapel gleichzeitig per Automat einzulagern. Der Artikelstapel wird dabei in einem speziellen kastenartigen Magazin mit Längsschlitz in einer Längsseitenwand gehandhabt. Das Magazin erfüllt den Zweck, daß der Artikelstapel konsistent zusammengehalten wird, und zwar von der Einlagerungsstelle am Wareneingang bis zum Beschickungsvorgang selbst. Das Magazin ist der Form des Artikels bzw. der Mehrzahl der gestapelten Artikel angepaßt. Nach einem Beschickungsvorgang im Schnelldrehautomaten wird das leere Magazin für ein erneutes Befüllen mit Artikeln zum Wareneingang zurückgeführt.

Aufgabe der Erfindung ist die Schaffung einer Kommissionieranlage der eingangs genannten Art, welche mit Hilfe einfacher Mittel ein wirkungsvolles Einlagern von Artikeln in den Schnelldrehautomaten und gegebenenfalls ein zweckmäßiges Bereitstellen von einzulagernden Artikeln ermöglicht.

Gelöst wird die der Erfindung zugrundeliegende Aufgabe durch die im Anspruch 1 angegebenen Mittel.

Vorteilhaft weitergebildet wird der Erfindungsgegenstand durch die Merkmale der Ansprüche 2 bis 14.

Ein erfindungsgemäßes Verfahren kennzeichnet sich durch die Merkmale des Anspruchs 15.

Wesen der Erfindung ist, daß das raumbewegliche Regalbediengerät eine Artikelhandhabe-Einheit besitzt, die sorten- bzw. dimensionsgleiche Artikel stapelweise magazinlos einlagert, wobei ein einzulagernder Artikelstapel ohne separates Artikelstapel-Magazin oder -Behältnis durch das Regalbediengerät gleichzeitig gehandhabt wird und die Artikelhandhabe-Einheit eine bodenseitige Artikelstapel-Aufnahme, einen verstellbaren Artikelstapel-Längsschieber, einen verstellbaren Artikelstapel-Querschieber zum Einlagern in einen Artikelschacht und eine insbesondere eine Reihe von Federfingern aufweisende verstellbare Artikelstapel-Längsklemmplatte aufweist, welche parallel zur und gegenüber der Artikelstapel-Aufnahme liegt und im eingeklemmten Zustand einen direkt aufgenommenen Artikelstapel durch die Artikelstapel-Längsklemmplatte, insbesondere durch deren Federfinger, in Stapelquerrichtung gegen die Artikelstapel-Aufnahme drückt.

Anstelle der Federfinger können auch andere Klemm-Mittel vorgesehen sein, welche ein örtliches Festklemmen jedes einzelnen Artikels im Artikelstapel besorgen, z.B. eine nachgiebige, rückstellelastische Klemmleiste.

Zwar ist aus FR 2 630 412 A1 eine raumbewegliche Artikelentnahmevorrichtung für ein Artikelregal bekannt. Das Artikelregal besitzt jedoch keine gattungsgemäßen leicht zur Vertikalen geneigten Artikelschächte, vielmehr vertikal übereinander angeordnete seitlich zugängliche Behälter, in welchen flache Gegenstände wie Briefpost und dergleichen aufgenommen sind. Durch zwei Klemmplatten der Artikelentnahmevorrichtung kann ein Briefpoststapel oder dergleichen entnommen und in auf einem Förderband laufende oben offene Behälter abgelegt werden. Die bekannte Artikelentnahmevorrichtung ist für eine Entnahme dikkerer Gegenstände im Stapel ungeeignet und besitzt weder verstellbare Artikelstapel-Längsschieber noch verstellbare Artikelstapel-Querschieber, wie dies bei der vorliegenden Erfindung der Fall ist.

Vorzugsweise ist das Regalbediengerät über ein Führungs- bzw. Schienensystem mit oder ohne Weichen von und zu zumindest einem Vorratsregal verfahrbar und bei einem ausgewählten seitlichen Ende eines Schachts des Vorratsregals, insbesondere eines Winkelblechs, positionierbar, wobei in jedem ausgewählten Schacht ein einziger zu handhabender Artikelstapel angeordnet ist bzw. werden kann und der Artikelstapel durch Verschieben in Stapelrichtung auf eine ausgerichtete Artikelaufnahme der Artikelhandhabe-Einheit gelangt, oder umgekehrt von der Artikelaufnahme in den ausgewählten Schacht gelangt.

Gegebenenfalls können in einem einzigen Schacht bei kleinen Produkten auch zwei dann parallele Artikelstapel eingelagert werden ("Mehrfachlastaufnahme").

Das Vorratsregal kann ein Übervorratsregal sein, welches dem Schnelldrehautomaten zugeordnet ist und sich vorzugsweise in der Nähe des Artikelregals des Schnelldrehautomaten befindet.

Das Vorratsregal kann aber auch ein Zwischenpuffer sein, welcher dem Wareneingang zugeordnet ist und sich vorzugsweise in der Nähe der Auspackstation befindet, an welcher die Artikelstapel aus einem Überkarton ausgepackt und zusammengestellt werden.

Bevorzugt sind sowohl ein oder mehrere Übervorratsregale als auch ein oder mehrere Zwischenpuffer je nach Größe der Kommissionieranlage und örtliche Raumbedingungen vorhanden, wie auch mehrere Schnelldrehautomaten vorhanden sein können.

Die erfindungsgemäße Kommissionieranlage läßt sich also in weiten Grenzen beliebig gestalten und insbesondere auch in der Zukunft ohne Schwierigkeiten erweitern.

Die ausgepackten Artikelstapel werden zweckmäßigerweise auf einer Artikelstapel-Ablage zusammengestellt, welche die Form ei-nes Teiles zumindest einer Regalebene des Vorratsregals aufweist, insbesondere Winkelbleche sind, wobei das Regalbediengerät für eine Artikelstapel-Übernahme durch Verschieben auch zur Artikelstapel-Ablage über das Schienen- bzw. Führungssystem verfahrbar und bei dieser Artikelstapel-Ablage, insbesondere bei einem seitlichen Ende eines Winkelblechs, positionierbar ist.

Für eine Positionierung zum Regalbediengerät kann auch die Artikelstapel-Ablage verschieblich, insbesondere auf einem Förderband oder auf einer Rutsche verschieblich, und/oder um eine Vertikalachse um vorzugsweise 90° oder 180° drehbar sein.

Die Artikelstapel-Ablage kann auch ein höhenverstellbares Regal mit herausziehbaren Schubladen sein, welche manuell oder automatisch bedienbar sein können.

Für ein Verstellen der Artikelstapel-Ablage kann gegebenenfalls ein Hand- oder Fußschalter von einer Bedienungsperson betätigt werden.

Die Kommissionieranlage läßt sich vollautomatisch auch so konzeptionieren, daß wareneingangsseitig ein Auspackautomat mit einem Greifarm vorgesehen ist, welcher jeweils einen vorzugsweise horizontalen Artikelstapel aus einem geöffneten Überkarton ergreift und auf der Artikelstapel-Ablage ablegt.

Auch das Öffnen und Anliefern des Überkartons kann gegebenenfalls per Maschine erfolgen.

Ein besonderes zweckmäßig gestaltetes Vorratsregal besitzt in ein oder mehreren übereinander angeordneten Ebenen jeweils nebeneinander angeordnete Winkelbleche.

Jedes Winkelblech kann horizontal verlaufen, ist jedoch in besonders hervorzuhebender Weise doppelt geneigt dergestalt, daß eine im Querschnitt rechtwinklige und in Längsrichtung schräge Rinne ausbildet ist, wobei die Winkelwurzel in jedem Längsquerschnitt der Rinne an tiefster Stelle liegt und beide Winkelschenkelflächen Anschlagflächen für einen aufgenommenen Artikelstapel sind, und ferner am tiefsten Rinnenende ein lösbarer, vorzugsweise niederdrückbarer Artikelanschlag vorgesehen ist.

Der lösbare Artikelanschlag kann nicht nur fremdbetätigt, sondern eigenbetätigt sein, z.B. durch einen Magneten. Auch kann der Artikelanschlag starr sein. In diesem Fall werden bei einer Verschiebung eines Artikelstapels die Artikel mit einer geeigneten Vorrichtung darübergehoben.

In einer Erfindungsvariante beträgt die Neigung der Rinne in Längsrichtung ca. 20° und die Neigung der Rinnenbasisfläche in Querrichtung ca. 15°. Je schräger die Rinnenneigung in Längsrichtung, desto größer die eigenständige Rutschfähigkeit des auflastenden Artikelstapels in der Rinne. Es hat sich gezeigt, daß im praktischen Betrieb bei vorgenannten Neigungsgrößen ein Artikelstapel mit Vorteil hinter- bzw. oberseitig mit einem Rollwagen stabil gehalten wird und zufriedenstellend in der Rinne rutscht, wenn eine Artikelstapel-Verlagerung im System der Kommissionieranlage vorgenommen wird. Die Querneigung von 15° fixiert einen Artikelstapel immer in der Winkelwurzel der Rinne.

Es kann also eine Längsfixierungshilfe in der Rinne vorgesehen sein, welcher den Artikelstapel gegen den Artikelanschlag drückt.

Die Längsfixierungshilfe ist zweckmäßigerweise der Rollwagen, ein längsverstellbarer angetriebener Artikelanschlag oder ein federvorgespannter Artikelanschlag.

Es sei hervorgehoben, daß in der vorgenannten winkligen doppelt geneigten Rinne unterschiedliche Artikelgrößen als Stapel in der Winkelwurzel fixiert gehalten werden können. Es genügt kubische Form. Mithin kann ein einziges Winkelblech für unterschiedliche Artikel verwendet werden, ohne daß die Gesamtanlage umgebaut werden muß.

Das Vorratsregal kann auch ein platzsparendes Doppelregal sein, welches Rücken an Rücken angeordnet ist.

Zweckmäßigerweise besitzt die Artikelhandhabe-Einheit des Regalbediengeräts einen Andockzapfen, welcher in eine entsprechende Aussparung bei einem ausgewählten Schacht eines Vorratsregals als Zentrierungshilfe in Eingriff bringbar ist.

Auch kann die Artikelhandhabe-Einheit einen Anschlag, insbesondere ein Röllchen besitzen, welcher bzw. welches mit dem Artikelstapel-Anschlag eines Schachts für ein Lösen bzw. Niederdrücken des Artikelstapel-Anschlags in Eingriff bringbar ist, wobei der Anschlag der Artikelhandhabe-Einheit auch der verstellbare Längsschieber selbst sein kann.

Eine Kommissionieranlage, welche ohne gesonderte Magazine für einzulagernde Artikelstapel auskommt, kennzeichnet sich insbesondere dadurch, daß die Artikelstapel-Aufnahme des Regalbediengeräts, die Schacht- bzw. Winkelblechausbildung des Übervorratsregals, des Zwischenpuffers und der Artikelstapel-Ablage beim Wareneingang hinsichtlich Länge, Breite und gegebenenfalls Neigung (Längsneigung, Querneigung) gleich ausgebildet sind.

Die Winkelblechausführung des Übervorratsregals kann aber auch unterschiedlich groß ausgebildet sein. Vorzugsweise bestimmt man möglichst wenig Klassen, um unterschiedlich große Artikel möglichst dicht einlagern zu können, wobei die Artikelstapel-Aufnahme des Regalbediengeräts immer gleich bleibt (entsprechend der größten Rasterung).

Eine besonders zweckmäßige Erfindungsvariante eines Regalbediengeräts sieht vor, die Artikelhandhabe-Einheit über eine Schwenkachse auf einem Schlitten zu befestigen, welcher auf einer Querschiene mit einer Neigung der Schachttiefe bzw. Schachtlängsrichtung des Vorratsregals, insbesondere ca. 20°, querverschieblich ist, wobei die Querschiene fest auf einem vertikal verschieblichen Hubschlitten des Regalbediengeräts befestigt ist.

Die Querschiene kann auch als Teleskop ausgeführt sein, dergestalt, daß sie in einer feststehenden Teleskopiereinheit verfahren werden kann.

Der besondere Vorteil dieser Variante ist, daß man mit wenig Achsen für eine Positionierung der Artikelhandhabe-Einheit auskommt (schachtparallele Achse inklusive zwei elektrische Zylinder für die Anlenkung). Auch benötigt man nur zwei Schieber (Längs- und Querschieber).

Eine andere nicht minder zweckmäßige Ausgestaltung eines Regalbediengeräts kennzeichnet sich dadurch, daß die Artikelhandhabe-Einheit zweigeteilt ist und eine separate höhenverstellbare Artikelstapel-Aufnahmeeinheit mit mehreren Winkelblechen nach Art, Lage und Größe der Artikelstapel-Aufnahme bzw. des Vorratsregals aufweist, welche zumindest einen eigenen verstellbaren zweiten Artikelstapel-Längsschieber besitzt, wobei durch die Artikelstapel-Aufnahmeeinheit mehrere Artikelstapel vom Zwischenpuffer oder von der Artikelstapel-Aufnahme zum Übervorratsregal förderbar sowie ein- und auslagerbar sind, sowie eine separate höhenverstellbare Artikelregal-Beschickungseinheit aufweist, welche ihrerseits zweigeteilt ist und zum einen eine höhenverstellbaren Einzel-Artikelstapel-Aufnahme mit dem Artikelstapel-Längsschieber und einem weiteren Artikelstapel-Querschieber und zum anderen eine raumbewegliche Greifereinheit mit der bodenseitigen Artikelstapel-Aufnahme, der Artikelstapel-Längsklemmplatte und dem verstellbaren Artikelstapel-Querschieber besitzt, wobei durch die Artikelregal-Beschickungseinheit ein einziger ausgewählter Artikelstapel vom Vorratsregal (Übervorratsregal, Zwischenpuffer) oder von der Artikelstapel-Ablage des Wareneingangs zum Schnelldrehautomaten förderbar und dort in einen ausgewählten im wesentlichen senkrechten Schacht des Artikelregals einlagerbar ist.

Für ein Einlagern des Artikelstapels in den Schnelldrehautomaten ist dann zweckmäßigerweise der Artikelstapel durch die Einzel-Artikelstapel-Aufnahme vom Vorratsregal in Stapellängsrichtung durch Verschieben mit dem Artikelstapel-Längsschieber entnehmbar und zum Schneldrehautomaten förderbar und nach einem Umsetzen bzw. Querverschieben des Artikelstapels vom der Einzel-Artikelstapel-Aufnahme durch den weiteren Artikelstapel-Querschieber auf die bodenseitige Artikelstapel-Aufnahme der ausgerichteten Greifereinheit (oder durch direkte Übernahme durch die Greifereinheit) und nach einem Festklemmen des gesamten Artikelstapels in Stapelquerrichtung durch die Federfinger-Längsklemmplatte beim ausgewählten Schacht des Schnelldrehautomaten durch Bewegen der Greifereinheit positionierbar und einlagerbar ist.

Hinsichtlich der Einzelartikel-Stapelaufnahme vom Vorratsregal sei erwähnt, daß auch, wie bei der Artikelstapel-Aufnahme, mehrere Einzelstapel am Regalbediengerät gepuffert werden können, und dadurch eine Spielzeitverkürzung möglich ist.

Die Greifereinheit ist bevorzugt über eine Drehachse an einem höhenverstellbaren Hubschlitten befestigt, welcher seinerseits an einer bodenseitig um zwei zueinander senkrechte Achsen angelenkte Vertikalstange des Regalbediengeräts höhenverschieblich ist.

Die Vertikalstange weist zweckmäßigerweise eine kürzere Länge auf als die Vertikalstange, an welcher die Einzel-Artikelstapel-Aufnahme und die Artikelstapel-Aufnahmeeinheit höhenverschieblich sind. Der Grund hierfür ist, daß die Höhe eines Übervorratregales ca. 5,5m betragen kann, während die Höhe des Schnelldrehautomaten in der Regel bei etwa 2,5m liegt.

Die 2,5m lange Achse kann auch Bestandteil der Hauptachse sein und in Form einer Tandemachse mit dieser verbunden sein.

Der besondere Vorteil der zweiten Ausführungsvariante ist, daß, die Schnelldrehautomat-Befüllungseinheit eine ausreichend lange (ca. 2,5m) schachtparallele Linearachse besitzt, durch die ein Verschieben der Greifereinheit längs des Schachtes erleichtert wird. Die eigentliche Vertikalachse oder -stange des Regalbediengeräts trägt nur die Aufnahmeeinheit (mehrere Artikelstapel auf der einen Seite - einen einzigen Artikelstapel auf der anderen Seite), welche für hohe Vorratsregale (im Bereich von ca. 5,5m) ebenfalls geeignet ist.

Auch auf der anderen Seite sind mehrere Artikelstapel zum Zwischenpuffern denkbar. Die Artikelstapelaufnahmeeinheit kann auch um eine vertikale Achse um 180° drehbar sein, um doppelseitige Regale bedienen zu können.

Bei der zweiten Ausführungsvariante kann es vorteilhaft sein, für das Wareneinlagern und Beschicken zwei getrennte Geräte zu verwenden, da die Vorgänge unterschiedliche Prioritäten haben können und somit mit einer geringeren Anzahl an Geräten auszukommen ist.

Bei jeder der beiden vorgenannten grundsätzlichen Ausführungsvarianten der Artikelhandhabe-Einheit ist es vorteilhaft, wenn das unmittelbare Einlagern in einen (Vertikal-)Schacht eines Schnelldrehautomaten unter Klemmschluß des Artikelstapels durch die Längsklemmplatte bei gleichzeitigem Ausschieben durch den Artikelstapel-Querschieber der Artikelstapel-Handhabeeinheit des Regalbediengeräts erfolgt. Der einzulagernde (nahezu oder exakt in Vertikalrichtung positionierte) Artikelstapel wird dann so lange geklemmt gehalten, bis er im Artikelregal auf einer Unterlage (d.h. auf einem bereits eingelagerten Artikel oder auf dem Schachtboden) auflastet.

Vorzugsweise wird die Klemmkraft beim Ausschieben produktspezifisch verringert. Insbesondere bei kurzen Artikel kann ein zusätzliches Bodenblech verwendet werden, welches mit der Klemmplatte eine Einheit bildet und die Artikel beim Einlagern so lange führt, daß sie nicht abknicken können.

Durch die Erfindung kann mithin komplett auf gesonderte Artikelstapel-Magazine (im Gegensatz zum eingangs genannten Stand der Technik) verzichtet werden. Derartige Magazine brauchen mithin weder produziert, noch einem besonderen Artikelstapel angepaßt, noch innerhalb des Systems der Kommissionieranlage befördert, insbesondere vom Schnelldrehautomaten zum normalerweise weit entfernten Wareneingang als Leergut zurückgefördert zu werden. Die Kommissionieranlage gestattet eine günstige Arbeitsplatzgestaltung beim Wareneingang. Dort können, sowie ein Lastkraftwagen die Überkartons mit den Artikeln anliefert (z.B. den Tageskommissionierbedarf an Artikeln), die Kartons schnell und effektiv kurzzeitig von mehreren Personen gleichzeitig ausgepackt und die Artikelstapel zusammengestellt werden, etwa in einer Frühschicht. Gleichwohl besorgen das oder die Regalbediengeräte (normalerweise über den Arbeitstag hinweg) die Verteilung und die Einlagerung der Artikel stapelweise an benötigter Stelle im Schnelldrehautomaten oder an optimierter Stelle innerhalb des Systems der Anlage unter Ausnutzung von Vorratsregalen in Form von Übervorratsregal(en) und/oder Zwischenpuffer(n), die nahezu beliebig für eine Erweiterung oder Änderung der Kommissionieranlage ergänzt oder umgestellt werden können.

Die Erfindung wird nachfolgend anhand von Ausführungsbeispielen unter Bezugnahme auf die beigefügte Zeichnung näher beschrieben; es zeigen:
- Fig. 1: eine Kommissionieranlage mit Schnelldrehautomaten, schienengebundenen Regalbediengeräten, Übervorratsregalen, Zwischenpuffer und Auspackstation in einer schematischen Draufsicht,
- Fig. 2: eine Artikelhandhabe-Einheit eines Regalbediengeräts des Schnelldrehautomaten in einer schematischen perspektivischen Ansicht gemäß einer ersten Ausführungsvariante,
- Fig. 3: ein Regalbediengerät des Schnelldrehautomaten mit Artikelhandhabe-Einheit in einer schematischen perspektivischen Ansicht gemäß einer zweiten Ausführungsvariante,
- Fig. 4: eine Kommissionieranlage im Bereich der Auspackstation in einer schematischen Draufsicht ähnlich Figur 1,
- Fig. 5: einen Schnelldrehautomat, ein Übervorratsregal und ein Regalbediengerät in der dazwischenliegenden Regalgasse schematisch in einer Stirnansicht,
- Fig-. 6: einen Teil des Übervorratsregals nach Fig. 5 gesehen in einer schematischen Seitenansicht von der Regalgasse,
- Fig. 7: eine Auspackstation mit Zwischenpuffer und dazwischen angeordnetem Regalbediengerät in einer schematischen Vertikalansicht ähnlich Fig. 5,
- Fig. 8: die Auspackstation nach Fig. 7 gesehen schematisch von oben,

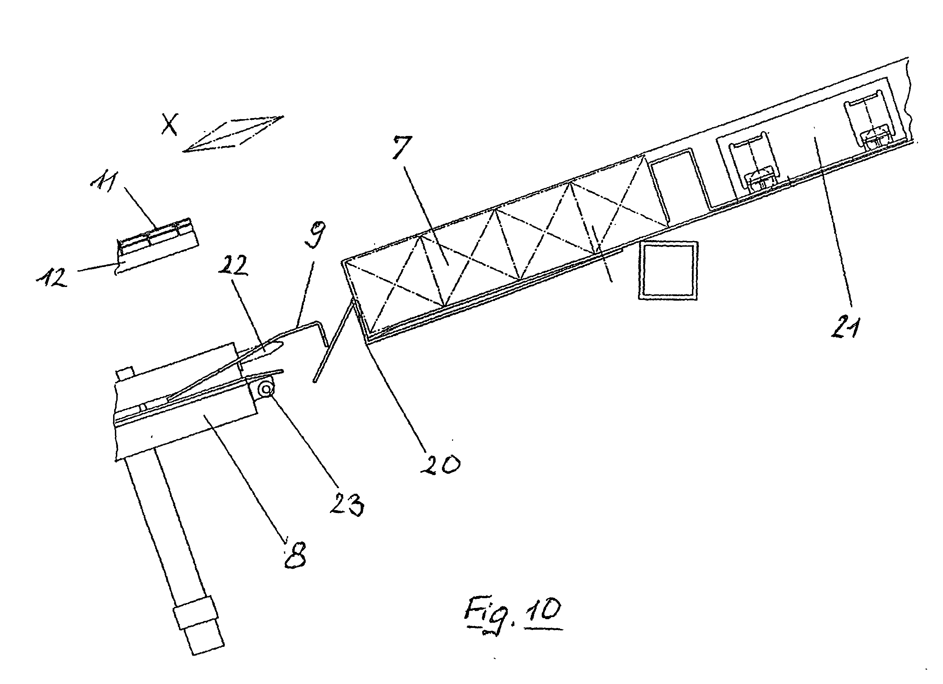

- Fig. 9: die Artikelhandhabe-Einheit nach Fig. 2 perspektivisch im Bereich der Artikelstapel-Aufnahme,
- Fig. 10, 11, 12 und 13: den Andockvorgang der Artikelhandhabe-Einheit nach Fig. 9 an ein Übervorratsregal in vier Ablaufstellungen schematisch in vertikalen Teilschnitten,
- Fig. 14: die Artikelhandhabe-Einheit nach Fig. 13 unmittelbar nach Aufnahme des Artikelstapels in einer perspektivischen Ansicht,
- Fig. 15: die Artikelhandhabe-Einheit nach Fig. 14 unmittelbar nach einem Klemmen des Artikelstapels durch Querverschiebung einer Längsklemmplatte,
- Fig. 16, 17 und 18: Zwischenstellungen der Artikelhandhabe-Einheit nach Fig. 14 für ein Positionieren bei einem leicht schrägen Vertikalschacht eines Schnelldrehautomaten nach Fig. 2,
- Fig. 19: das Regalbediengerät nach Fig. 3 in einer Artikelstapel-Verschiebestellung,
- Fig. 20: eine Auspackstation mit Zwischenpuffer in einer schematischen Vertikalansicht ähnlich Fig. 7, und
- Fig. 21: die Auspackstation nach Fig. 20 in einer schematischen Draufsicht.

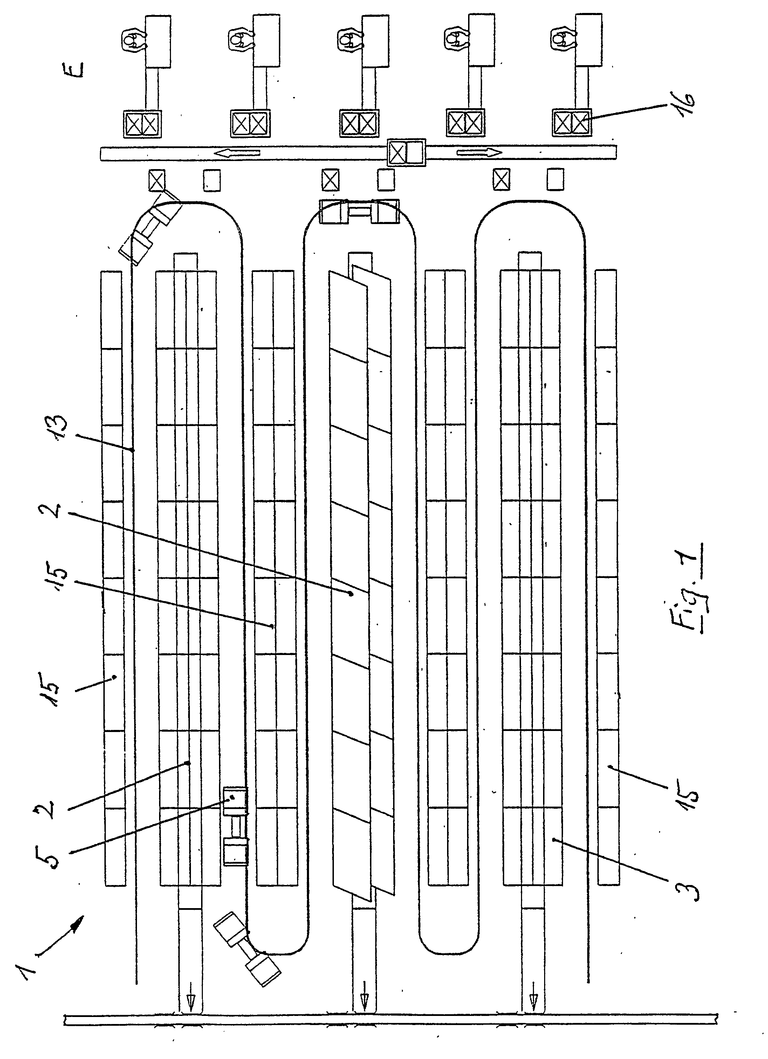

In Fig. 1 ist schematisch in Draufsicht eine Kommissionieranlage 1 mit drei Schnelldrehautomaten 2, vier Übervorratsregalen 15 und fünf Arbeitsplätzen am Wareneingang E mit Artikelstapel-Ablagen und Zwischenpuffer 16 gezeigt, wobei über ein Führungs- bzw. Schienensystem 13 vier Regalbediengeräte 5 zwischen den einzelnen Bereichen verfahrbar sind.

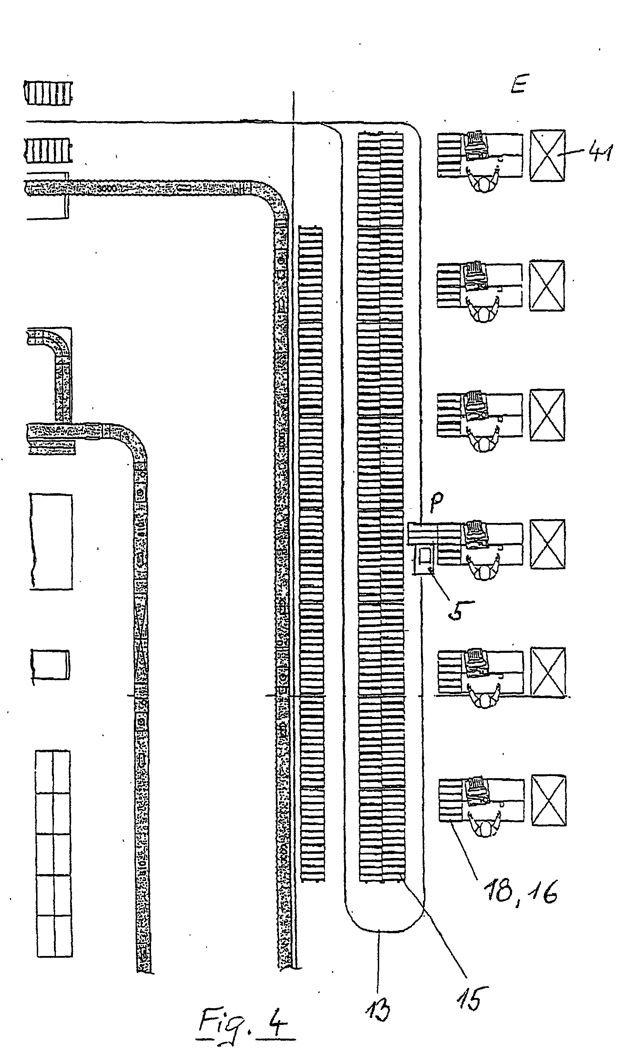

Eine weitere Variante des Systems ist bezüglich des Wareneingangs E in Fig. 4 gezeigt.

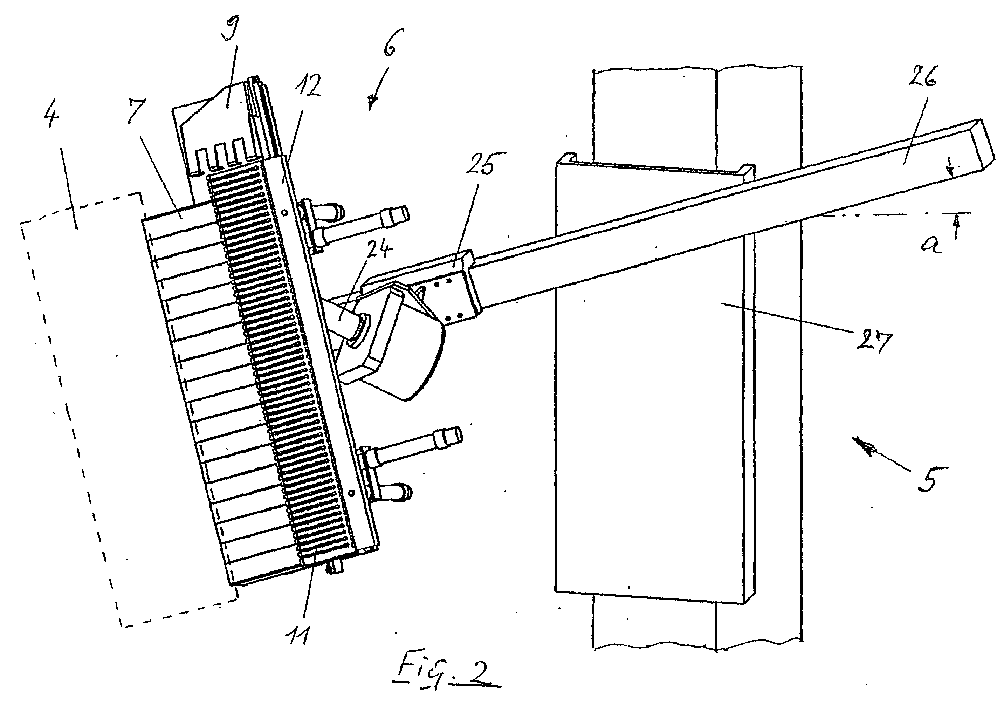

Jeder Schnelldrehautomat 2 weist mehrere Artikelregale 3 mit nebeneinander angeordneten, im wesentlichen senkrechten, vorzugsweise leicht geneigten, von vorne zugänglichen Artikelschächten 4 gemäß Fig. 2 auf, in denen zu kommissionierende Artikel eingelagert werden können, und zwar mit Hilfe des Regalbediengeräts 5, welches bei jedem Artikelschacht 4 des Schnelldrehautomaten positionierbar ist.

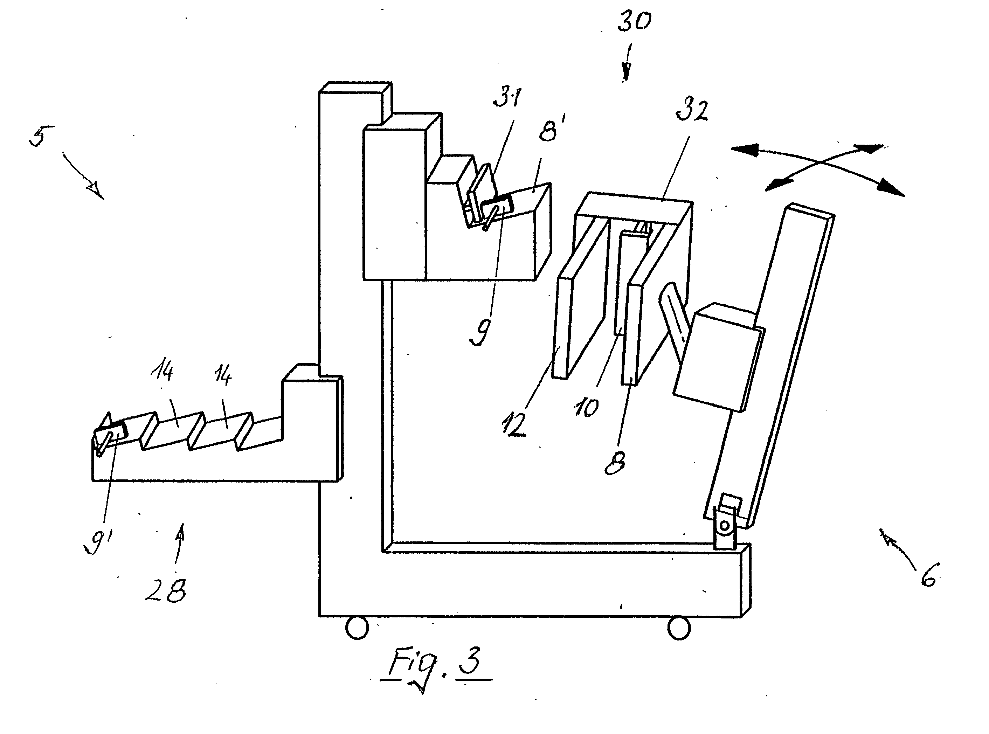

Jedes Regalbediengerät 5, beispielsweise gemäß den beiden grundsätzlichen Varianten nach den Fig. 2 und 3, besitzt eine Artikelhandhabe-Einheit 6, die sorten- bzw. dimensionsgleiche Artikel stapelweise magazinlos einlagern kann, wobei ein einzulagernder Artikelstapel 7 ohne separates Artikelstapel-Magazin oder -Behältnis durch das Regalbediengerät gleichzeitig gehandhabt wird und die Artikelhandhabe-Einheit 6 eine bodenseitige Artikelstapel-Aufnahme 8, einen verstellbaren Artikelstapel-Längsschieber 9, einen verstellbaren Artikelstapel-Querschieber 10 und eine eine Reihe von Federfinger 11 aufweisende verstellbare Artikelstapel-Längsklemmplatte 12 besitzt, welche parallel zur und gegenüber der Artikelstapel-Aufnahme 8 liegt und im eingeklemmten Zustand einen aufgenommenen Artikelstapel 7 durch die Federfinger in Stapelquerrichtung Q gegen die Artikelstapel-Aufnahme drückt.

Die "bodenseitige" Artikelstapel-Aufnahme 7, welche normalerweise unten in der Artikelhandhabe-Einheit 6 liegt, kann auch eine nicht-bodenseitige, z.B. seitliche vertikale Lage einnehmen, insbesondere dann, wenn ein festgeklemmter Artikelstapel bei einem (Vertikal-)Schacht des Schnelldrehautomaten positioniert wird.

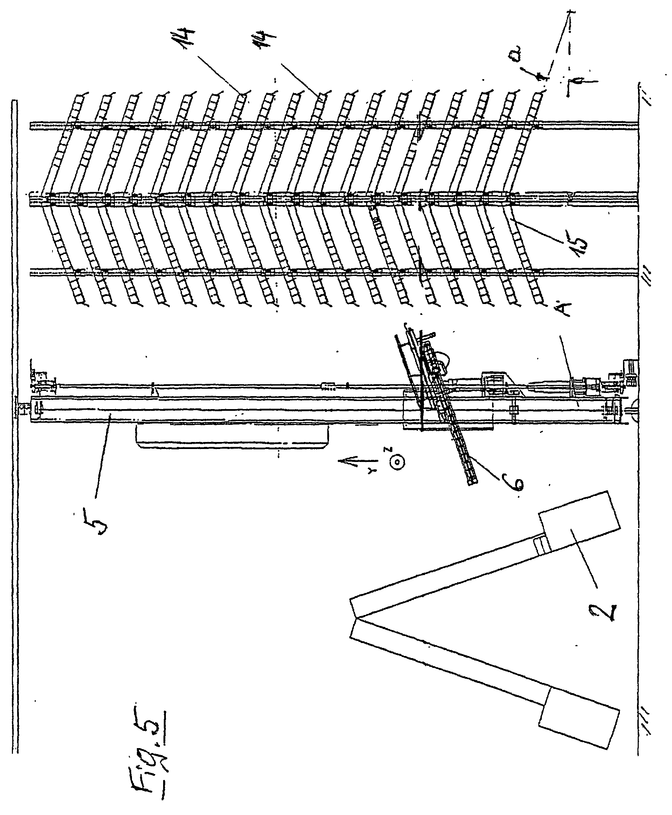

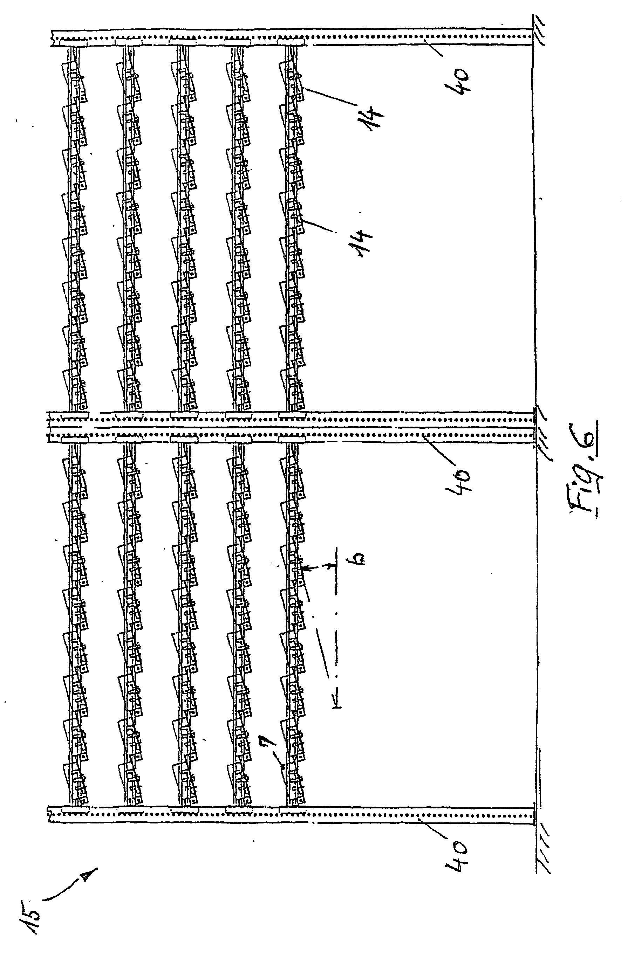

Jedes Vorratsregal, sowohl Übervorratsregal 15 als auch der Zwischenpuffer 16, besitzt den gleichen Grundaufbau in Form eines Stativs 40 mit vier Stehern und mehreren Regalebenen in Form von neben einander angeordneten doppelt geneigten Winkelblechen 14, wie dies insbesondere den Fig. 5, 6 und 7 zu entnehmen ist.

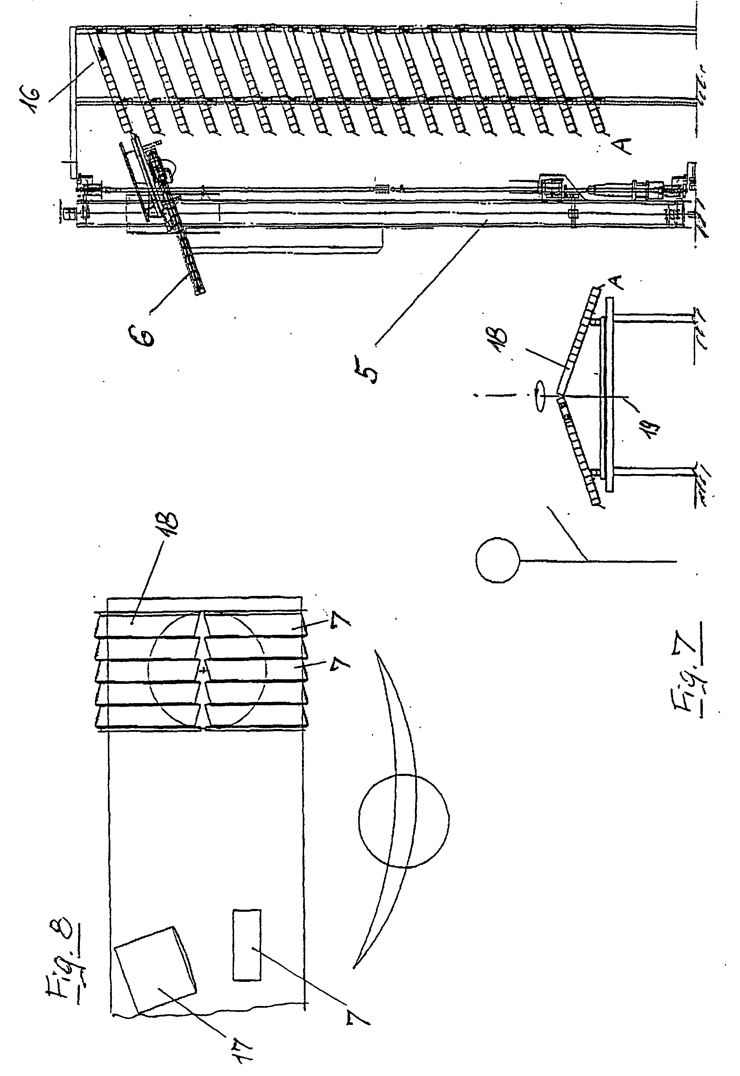

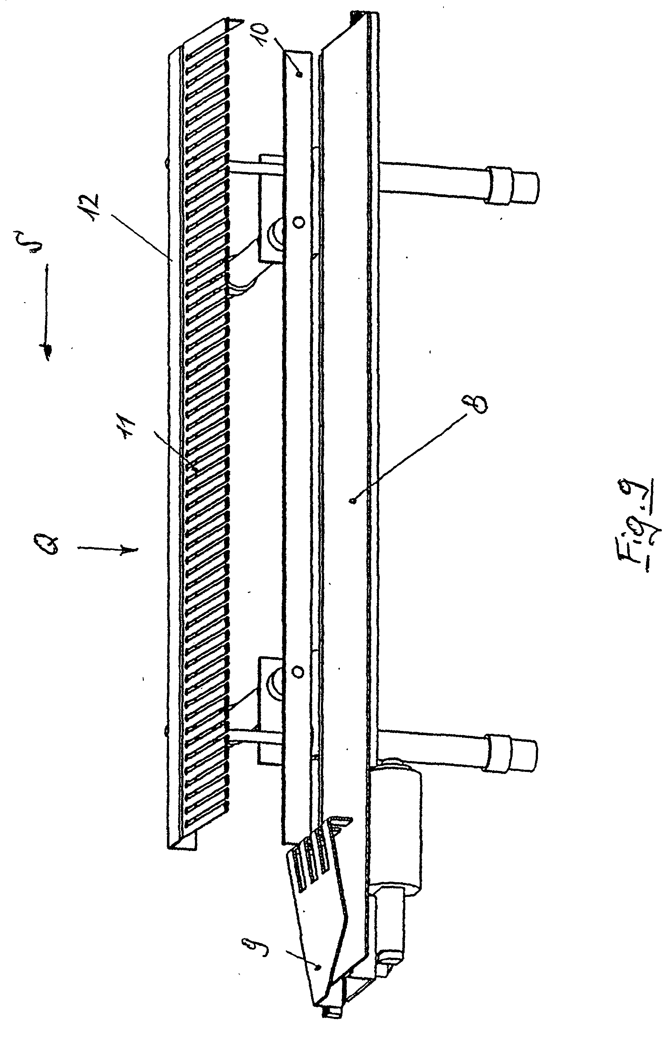

Entsprechend ist auch die Artikelstapel-Ablage 18 beim Wareneingang E konzipiert, wobei diese nur in einer einzigen Regalebene liegt und zwei Ablagen 18 Rücken an Rücken angeordnet sein können, wie dies insbesondere den Fig. 7 und 8 zu entnehmen ist.

Ein doppelt geneigtes Winkelblech 14 bildet eine im Querschnitt rechtwinklige und in Längsrichtung schräge Rinne, wobei die Winkelwurzel in jedem Längsquerschnitt der Rinne an tiefster Stelle liegt und beide Winkelschenkelflächen Anschlagflächen für einen aufgenommenen Artikelstapel 7 sind, und ferner am tiefsten Rinnenende ein lösbarer, vorzugsweise niederdrückbarer Artikelanschlag 20 vorgesehen ist, wie dies insbesondere in Fig. 12 gezeigt ist.

Die Neigung a der Rinne in Längsrichtung beträgt 19°. Die Neigung b der Rinnenbasisfläche in Querrichtung 15°.

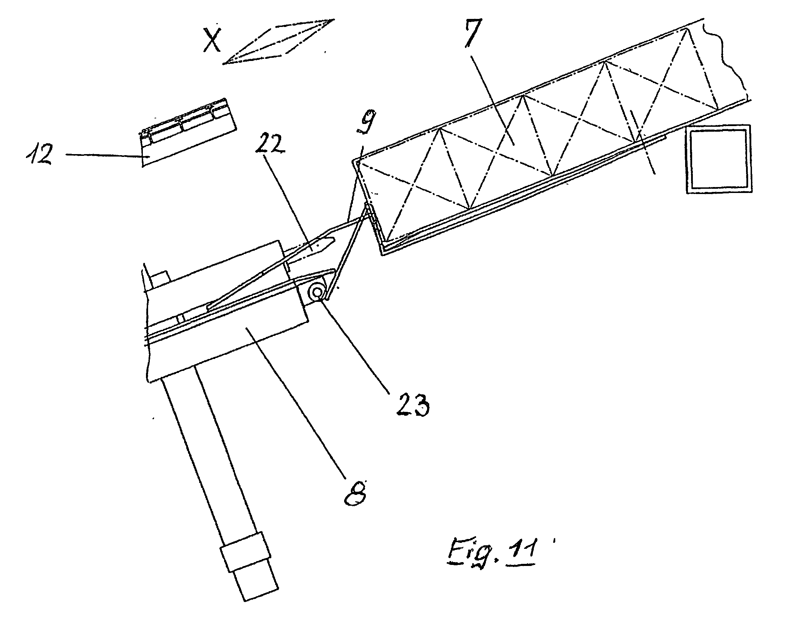

Ein in der Rinne aufgenommener Artikelstapel 7 kann eine Längsfixierungshilfe aufweisen, insbesondere einen Rollwagen 21 nach Fig. 10, welcher den Artikelstapel gegen den Artikelanschlag 20 drückt.

Wie ein doppelt geneigtes Winkelblech, so ist auch die bodenseitige Artikelstapel-Aufnahme 8 der Artikelhandhabe-Einheit des Regalbediengeräts geneigt, und zwar in der Grundstellung bei einem Transport eines Artikelstapels von Regal zu Regal und bei einer Verschiebung eines Artikelstapels in Stapelrichtung von Regal zu Regal, nicht bei einem Positionieren und Einlagern bei einem ausgewählten (Vertikal-)Schacht 4 eines Schnelldrehautomaten, beispielsweise gemäß Fig. 2. In letztgenannter Stellung ist der Artikelstapel geklemmt gehalten, und zwar durch die Längklemmplatte 12, deren Federfinger 11 den in der Aufnahme 8 aufgenommenen Artikelstapel gegen die Artikelstapel-Aufnahme 8 drückt.

Jedes Regalbediengerät 5 ist also über das Führungs- bzw. Schienensystem 13 von und zu zumindest einem Vorratsregal verfahrbar und bei einem ausgewählten seitlichen Ende A eines Schachts des Vorratsregals, nämlich bei einem Winkelblech 14 stirnseitig positionierbar ist.

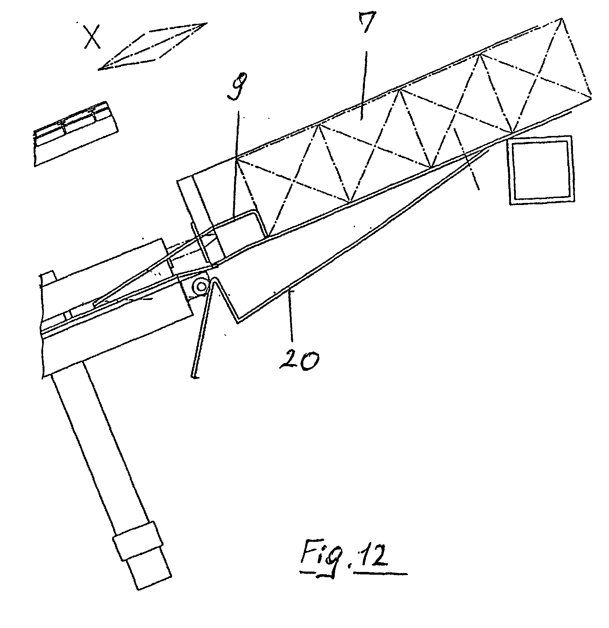

Mit besonderem Bezug auf die Fig. 10, 11, 12 und 13 gelangt bei jedem ausgewählten Winkelblech ein einziger zu handhabender Artikelstapel 7 durch Verschieben in Stapelrichtung S auf eine ausgerichtete Artikelaufnahme 8 der Artikelhandhabe-Einheit gelangen, und umgekehrt.

Anstelle eines einzigen Artikelstapels können, insbesondere bei kleinen Artikeln, zwei parallel liegende Artikelsäulen oder - stapel in einem Regalschacht zu liegen kommen.

Das Regalbediengerät nach Fig. 2 ist besitzt eine Artikelhandhabe-Einheit 6, welche über eine Schwenkachse 24 auf einem Schlitten 25 befestigt ist, wobei die Querschiene 26 fest oder teleskopierbar auf einem vertikal verschieblichen Hubschlitten 27 des Regalbediengeräts 5 befestigt ist.

Im Betrieb fährt das Regalbediengerät beispielsweise zu dem Schacht im Übervorratsregal mit dem zu entnehmenden Artikelstapel. Die Positionierung in X- und Y-Richtung erfolgt über eine entsprechende optische oder induktive Sensorik. Durch eine Lernfahrt des Regalbediengeräts und seiner Wiederholbarkeit wird vorab grobpositioniert und dann über einen Kegel mit einer entsprechenden Bohrung am Winkelblech der Regalseite feinpositioniert.

Als zweite Bewegung beginnt die Zustellfahrt der Beschickungseinheit über die Zustellachse bzw. Querschiene 26, welche in Richtung der gedachten Verlängerung des Übervorratsregals verfährt.

Gemäß Fig. 10, 11 und 12 ist diese Bewegung in mehrere Funktionen geteilt:

Zuerst wird der Anschlag 20 des Übervorratsregals durch die Linearbewegung über Röllchen 23 an der Beschickungseinheit nach unten gedrückt. Gleichzeitig wird der zu entnehmende Artikelstapel 7 im Übervorratsregal vom Schieber 9 der Beschickungseinheit gestützt. Während dieser Bewegung erfolgt auch ein exaktes Positionieren der Beschickungseinheit am Übervorratsregal über eine Kegelbohrung-Zentrierung 22, um eine möglichst homogene Gleitfläche zwischen Übervorratsregal-Blech und Beschikkungseinheit-Rutschblech zu erzielen.

Der Kegel 22 fährt auch entweder teleskopartig oder über eine eigene Achse mit einer höheren Geschwindigkeit als der Querschieber aus, so daß sich keine Bauteilkollision beim Beschikken des Schachts des Schnelldrehautomaten ergibt.

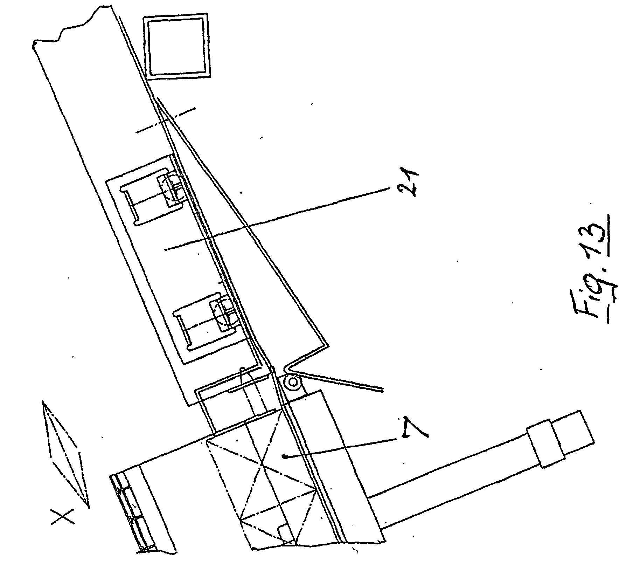

Gemäß Fig. 13 erfolgt nach Abschluß des Andockvorgangs das Entnehmen des Artikelstapels 7. Durch Verfahren des Schiebers 9 rutscht der Artikelstapel auf das Rutschblech der Beschicküngseinheit. Kontinuierlich fährt dabei der Stützwagen 21 am Ende des Artikelstapels 7 im Übervorratsreagal nach, um die Integrität des Artikelstapels zu gewährleisten.

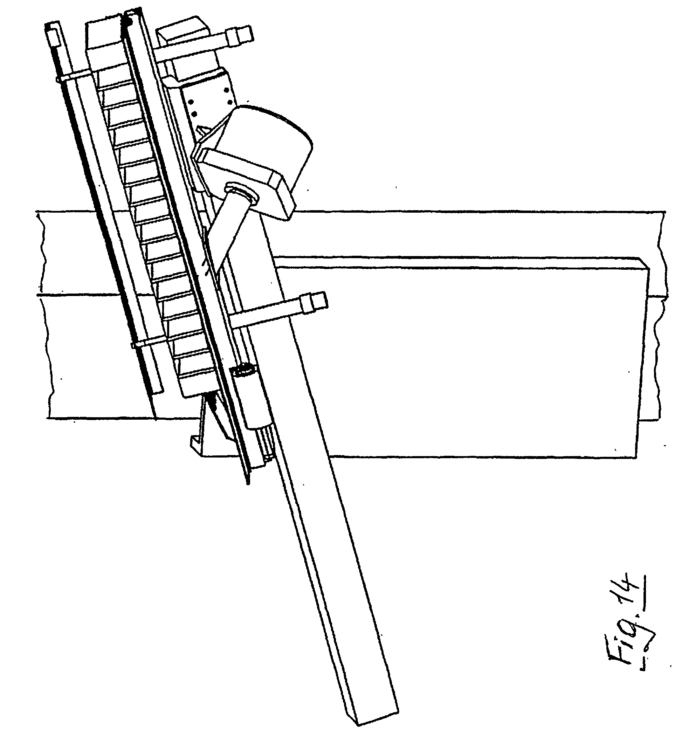

Gemäß Fig. 14 gilt dieser Vorgang als abgeschlossen, wenn der letzte Artikel der Säule bzw. des Stapels auf die Beschickungseinheit geschoben wurde. Der Stützwagen 21 bringt bis zu dieser Position ständig seine Kraft auf den Stapel ein, um ein Kippen oder Zurückbleiben der letzten Artikel zu verhindern.

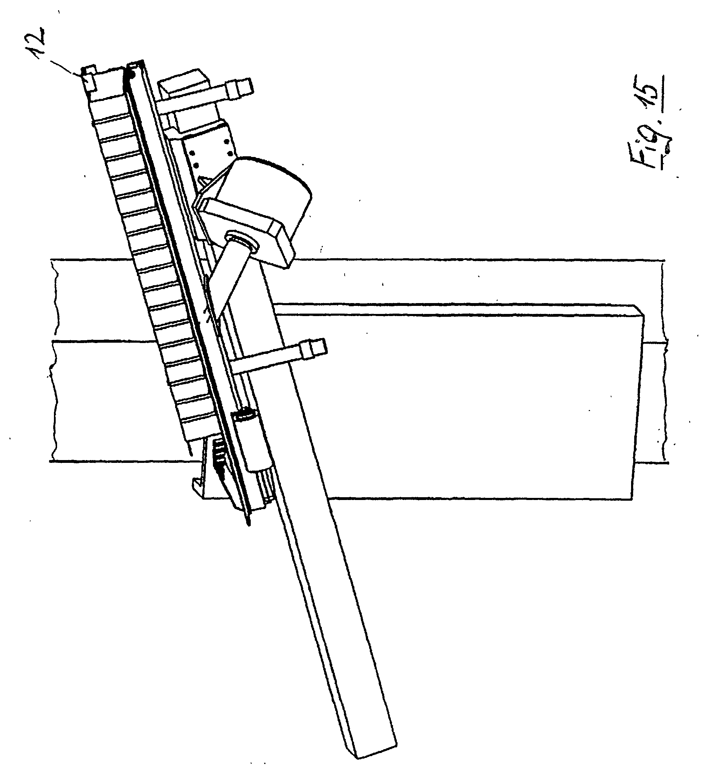

Gemäß Fig. 15 wird, nachdem sich der Artikelstapel vollständig auf der Beschickungseinheit befindet, der Artikelstapel mittels der Klemmvorrichtung in Form der Längsklemmplatte 12 in seiner Lage fixiert.

Beim Verfahren der Beschickungseinheit kommt es, entgegen der Andocksituation, zum Heraufbewegen des Anschlags 20 durch eine Gleitbewegung an dem zuvor beschriebenen Röllchen. In diesem Bereich fährt der Stützwagen weiter mit der Artikelsäule bzw. dem Artikelstapel mit und wird nach einem Verfahrweg von ca. 20-30mm vom bereits heraufgeklappten Anschlag im Übervorratsregal sicher gehalten. Beim Entnehmen einer Produktsäule stützt sich der am Stützwagen montierte Rechen entsprechend am letzten Produkt ab und wird gesichert vom auffahrenden Anschlag gehalten (Durchtauchen des Rechens durch das Anschlagblech).

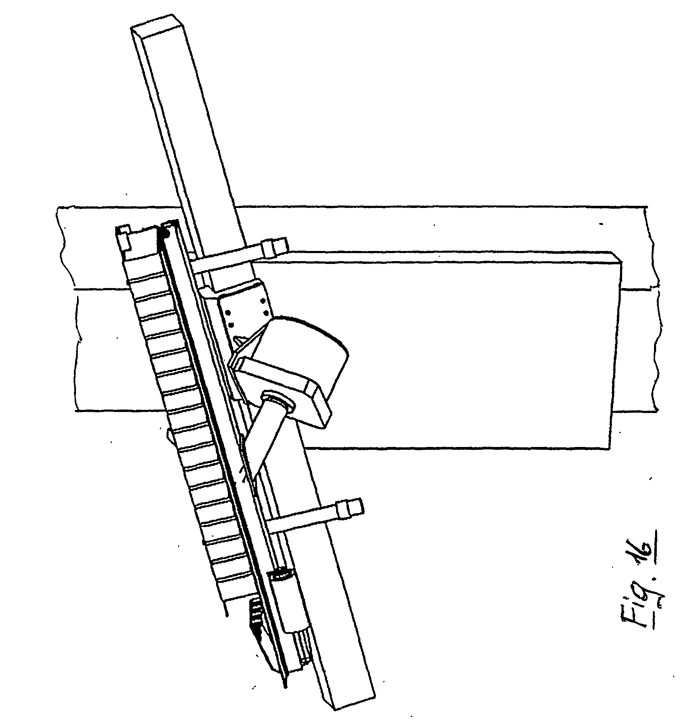

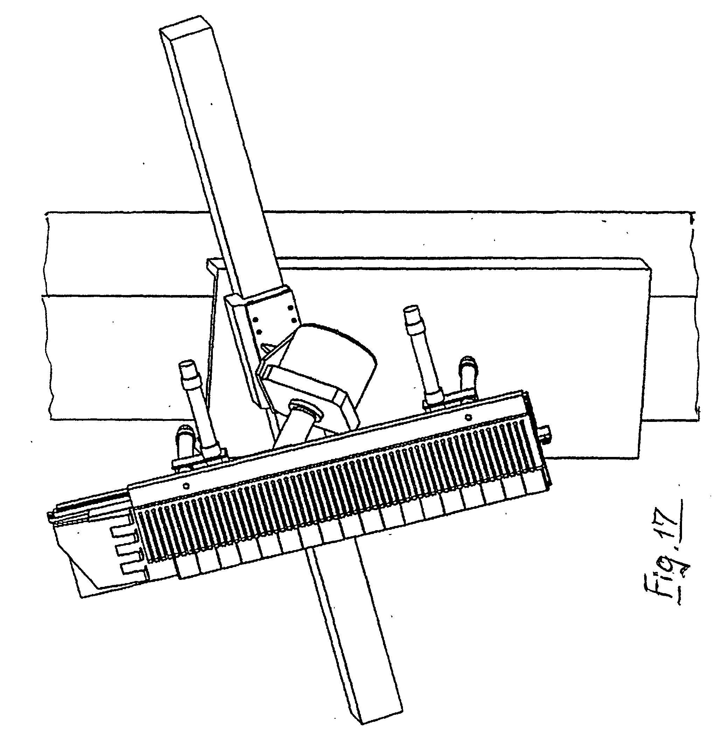

Gemäß Fig. 16 und 17 wird danach die Beschickungseinheit mittels der Zustellachse oder Querschiene 26 und Schlitten 25 in die Mittelposition verschoben. Hier erfolgt das Schwenken mit der Schwenkachse 24 in eine Lage, in der der Artikelstapel 7 parallel zum Schnelldrehautomatenschacht 4 steht. Durch geeignete Wahl einer räumlich geneigten Schwenkachse 24 ist es möglich, den Artikelstapel 7 aus dem doppelt geneigten Winkelblech des Übervorratsregals parallel zu dem doppelt geneigten Schnelldrehautomaten-Schacht 4 mit nur einer Schwenkbewegung zu drehen.

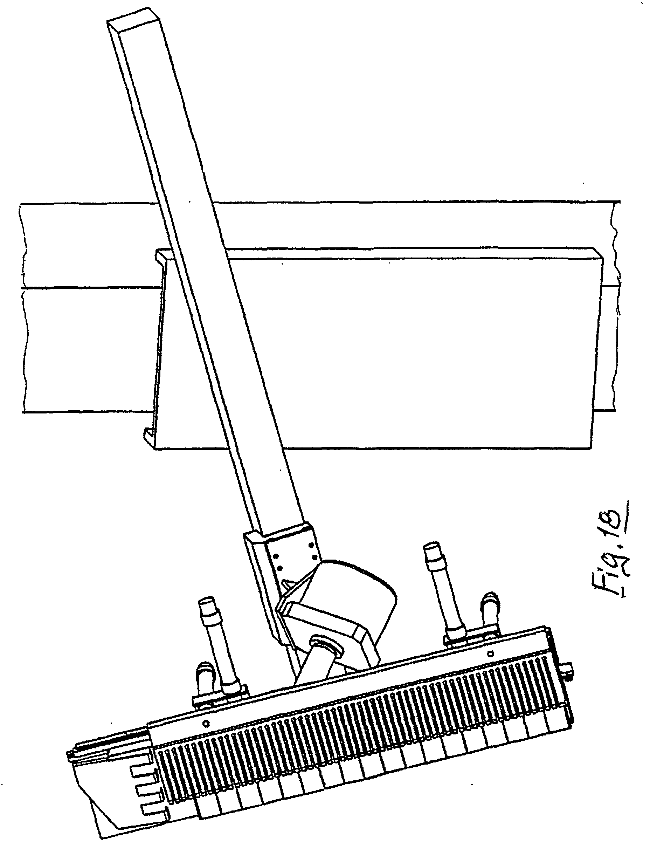

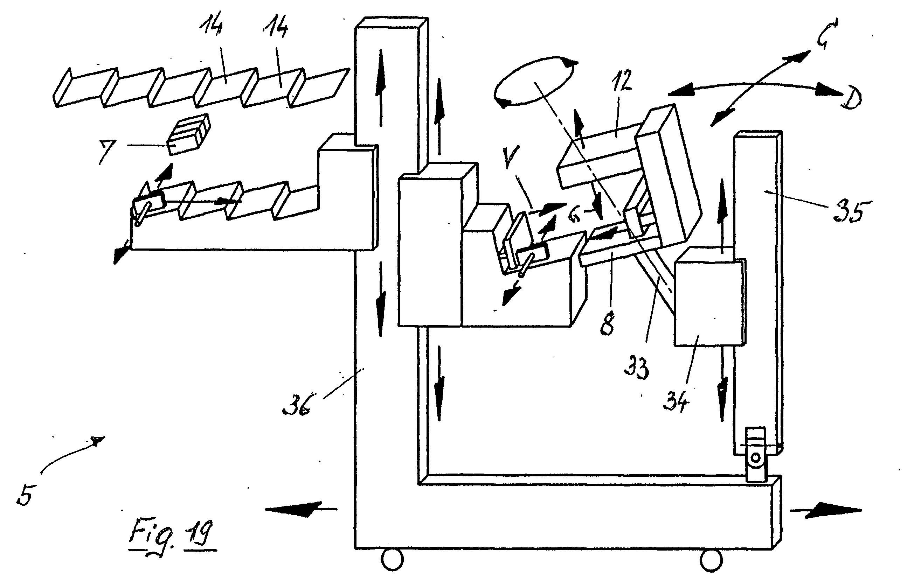

Gemäß Fig. 18 fährt als nächstes das Regalbediengerät zu dem zu befüllenden Schnelldrehautomaten-Schacht. Hier erfolgt wieder eine genaue Positionierung in X-, Y- und Z-Richtung. Danach wird die Beschickungseinheit mittels der Zustellachse oder Querschiene 26 zum Schacht 4 des Schnelldrehautomaten 2 zugestellt, mittels optischer oder induktiver Sensorik feinpositioniert und in den Schacht 4 des Schnelldrehautomaten eingeführt. Die Beschickungseinheit senkt sich in Schachtrichtung ab, bis der Artikelstapel 7 auf den obersten im Schacht befindlichen Artikel aufsetzt. Dieses Absenken erfolgt durch eine koordinierte Bewegung von Regalbediengerät-Fahrachse, Hubtisch 27 und Querschiene 26 bzw. Schlitten 25. Es ist auch eine zusätzliche Linearachse parallel zu den Schächten des Schnelldrehautomaten denkbar.

Gemäß Fig. 2 schiebt der Querschieber 12 den Artikelstapel 7 durch die Klemmung in den Schacht 4 des Schnelldrehautomaten. Die Klemmvorrichtung wird gelöst, und die Beschickungseinheit mittels Querschiene/Schlitten aus dem Schacht 4 gezogen und in die Mittelposition gefahren.

Mit Bezug auf Fig. 4, welche ein gegenüber Fig. 1 anders angeordnetes Übervorratsregal 15 aufweist, kann beim Wareneingang E ein Überkarton von einer Palette 41 von einer Person auf einem Arbeitstisch ausgepackt werden, und es können Artikelstapel, beispielsweise von einer Länge von ca. 600mm, zusammengestellt sowie auf einer Ablage 16, 18 angeordnet werden.

Dieser "Wareneingangspuffer" 16, 18 stellt sich folgendermaßen dar:

In zwei Ebenen sind jeweils ca. fünf Speicherschächte vorhanden, wobei, um ergonomisch arbeiten zu können, jeweils ein freier Speicherschacht in die Position P geschobe O on wird. Nach dem Abschieben wird ein Fußtaster betätigt, damit automatisch der nächste freie Schacht des Wareneingangspuffers in die richtige Position gefahren wird. Auch können alternativ die Schächte auf einem Förderband transportiert werden, wobei auch hier jeweils ein freier Schacht in die Position P gefahren wird. Die Artikel werden sortenrein in die Schächte des Wareneingangspuffers manuell oder automatisch befördert.

Zu diesen Wareneingangsplätzen korrespondiert ein Übervorratsregal 15, daß so auslegt ist, daß in etwa ein Tagesbedarf an Artikeleingängen zwischengepuffert wird, wobei die Länge so groß ist, daß eine bestimmte Anzahl von umlaufenden Regalbediengeräten oft genug an den Wareneingangsplätzen vorbeikommen, um die entsprechend gefüllten Kanäle wieder zu entleeren und umzulagern. Die Auslagerung vom Wareneingangspuffer auf das Regalbediengerät 5 erfolgt in gleicher Weise wie aus dem Übervorratsregal.

Es sind jedoch noch andere Ausführungsmöglichkeiten einer Ablage 18 am Wareneingang E denkbar.

Insbesondere kann gemäß Fig. 7 und 8 vorgesehen sein, die aus einem Überkarton 17 ausgepackten Artikelstapel 7 auf einer Doppel-Ablage 18 abzulegen, wobei die Artikelstapel-Ablage 18 um eine Vertikalachse 19 um 180° drehbar ist, um die abzutransportierenden Artikelstapel 7 in Richtung Regalbediengerät 5 auszurichten und um gleichermaßen die Doppel-Ablage 8 auf der anderen Seite befüllen zu können.

Das Regalbediengerät 5 gemäß Fig. 7 kann nach einer 180°-Drehung der Artikelhandhabe-Einheit 6 um eine Vertikalachse gedreht und in Vertikalrichtung nach unten verstellt werden, um den Artikelstapel 7 durch Verschiebung zu übernehmen. Längsneigung a und Querneigung b der Ablage und der Aufnahme 8 sind gleich. Beide Vorrichtungen sind exakt zueinander in Längsrichtung ausgerichtet, so daß ein Verschieben des Artikelstapels unter Ausnützung des Gefälles mit Unterstützung des Rollwagens stattfinden kann. Der Längsschieber 9 dient hierbei zum einen dazu, den Artikelanschlag bei A der Ablage zu lösen, und ferner dazu, den Artikelstapel beim Zurückfahren "zu bremsen", bis der Artikelstapel vollständig auf der Aufnahme 8 der Artikelhandhabe-Einheit des Regalbediengeräts aufgenommen ist. Dann dient der Schieber als Artikelanschlag.

Der Artikelanschlag A kann auch durch das Zustellen der Beschickungseinheit gelöst werden. Der Längsschieber selbst besitzt dann einen Rechen, der durch den Artikelanschlag durchtauchen kann. Dieser Rechen bewegt beim Andocken die Produktsäule ca. 20mm nach hinten, um daraufhin die Artikelsäule unter Ausnutzung der Schwerkraft kontrolliert durch den Querschieber aufzunehmen.

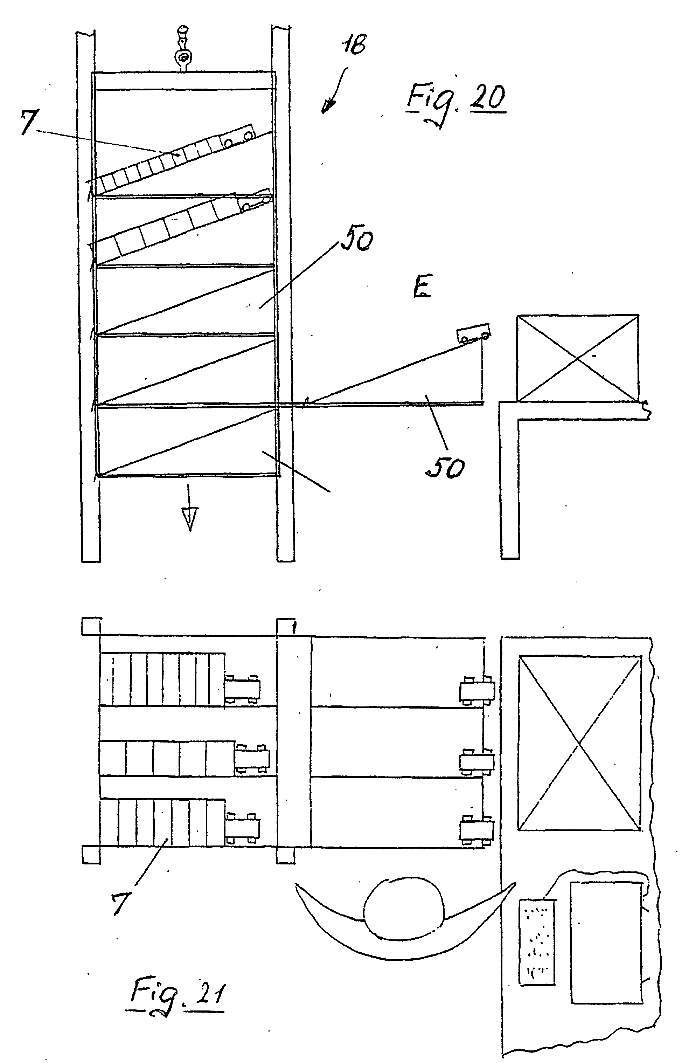

Eine weitere Auspackstation gemäß Fig. 20 und 21 stellt sich folgendermaßen dar:

Die Artikelstapel-Ablage 18 umfaßt ein vertikal verschiebbares Regal mit horizontal beweglichen Schubladen 50, welche manuell in den Bereich E einer Bedienungsperson herausgezogen werden können. Das vertikal verschiebbare Regal fährt hierbei mit einer freien Ebene auf Arbeitsplatzniveau. Manuell wird die leere Schublade 50 gemäß Zeichnung nach rechts gezogen, worauf man z.B. drei Kanäle in Form von doppelt geneigten Winkelblechen mit jeweils einem Artikelstapel 7 befüllen und oberseitig gemäß Zeichnung rechts jeden Artikelstapel mit einem Rollwagen stabilisieren kann. Danach wird die befüllte Schublade in das Regal zurückgestellt. Per Hand- oder Fußtaster wird dann das-Regal in der Höhe (oder seitlich) verstellt, dergestalt, daß die nächste freie Schublade auf Arbeitsniveau gelangt. Das Aus- und Einfahren der Schubladen sowie die Regalverstellung in Höhen- und/oder in Seitenrichtung kann insgesamt auch automatisch erfolgen.

Für Vollautomatisierung des Wareneingangs kann auch vorgesehen sein, daß die aus einem Überkarton als Schüttgut ausgeschütteten Artikel maschinell ausgerichtet, von einer Lesestation gelesen, für eine Chargenkontrolle kontrolliert, dann durch eine geeignete Maschine zu Säulen geordnet und in den Zwischenpuffer gefördert werden.

Die in den Fig. 3 und 19 veranschaulichte Erfindungsvariante eines Regalbediengeräts ist hinsichtlich der Artikelhandhabe-Einheit 6 zweigeteilt, nämlich in eine separate höhenverstellbare Artikelstapel-Aufnahmeeinheit 28 mit mehreren Winkelblechen 14 nach Art, Lage und Größe der Artikelstapel-Aufnahme 8 bzw. des Vorratsregals, welche zumindest einen eigenen verstellbaren zweiten Artikelstapel-Längsschieber 29 besitzt, wobei durch die Artikelstapel-Aufnahmeeinheit 28 mehrere Artikelstapel 7 vom Zwischenpuffer 16 oder von der Artikelstapel-Aufnahme zum Übervorratsregal 15 förderbar sowie ein- und auslagerbar sind, und in eine separate höhenverstellbare Artikelregal-Beschickungseinheit 30, welche ihrerseits zweigeteilt ist und zum einen eine höhenverstellbare Einzel-Artikelstapel-Aufnahme 8' mit dem Artikelstapel-Längsschieber 9 und einem weiteren Artikelstapel-Querschieber 31 und zum anderen eine raumbewegliche Greifereinheit 32 mit der bodenseitigen Artikelstapel-Aufnahme 8', der Artikelstapel-Längsklemmplatte 12' und dem verstellbaren Artikelstapel-Querschieber 10 besitzt, wobei durch die Artikelregal-Beschickungseinheit 30 ein einziger ausgewählter Artikelstapel 7' (bei kurzen Artikeln gegebenenfalls zwei oder mehrere parallele Artikelstapel) vom Vorratsregal (Übervorratsregal 15, Zwischenpuffer 16) oder von der Artikelstapel-Ablage 18 des Wareneingangs E zum Schnelldrehautomaten 2 förderbar und dort in einen ausgewählten im wesentlichen senkrechten Schacht des Artikelregals einlagerbar ist.

Für ein Einlagern des Artikelstapels in den Schnelldrehautomaten 2 ist der Artikelstapel 7 durch die Einzel-Artikelstapel-Aufnahme 8' vom Vorratsregal in Stapellängsrichtung durch Verschieben mit dem Artikelstapel-Längsschieber 9 entnehmbar und zum Schnelldrehautomaten 2 förderbar und nach einem Umsetzen bzw. Querverschieben V des Artikelstapels 7 vom der Einzel-Artikelstapel-Aufnahme 8' durch den weiteren Artikelstapel-Querschieber 31 auf die bodenseitige Artikelstapel-Aufnahme 8' der ausgerichteten Greifereinheit 32 und nach einem Festklemmen des gesamten Artikelstapels in Stapelquerrichtung Q durch die Federfinger-Längsklemmplatte 12 beim ausgewählten Schacht des Schnelldrehautomaten 2 durch Bewegen der Greifereinheit positionierbar und einlagerbar ist.

Die Greifereinheit 32 ist über eine Drehachse 33 an einen höhenverstellbaren Hubschlitten 34 befestigt, welcher seinerseits an einer bodenseitig um zwei zueinander senkrechte Achsen C, D angelenkte Vertikalstange 35 des Regalbediengeräts 5 höhenverschieblich ist.

Die Vertikalstange 35 weist eine kürzere Länge auf als die Vertikalstange 36, an welcher die Einzel-Artikelstapel-Aufnahme 8' und die Artikelstapel-Aufnahmeeinheit 28 höhenverschieblich sind.

Gemäß den Figuren 3 und 19 kann also das kombinierte Wareneinlagerungs-Beschickungsgerät aus dem Wareneingang mit Hilfe der Wareneingangseinheit Artikelsäulen 7 aus schräggestellten, zum Gerät hin geneigten Regalen entnehmen. Der Stapel wird durch den positionierten Schieber geführt. Dieser Schieber bringt am Einlagerungsort die Ware auch in das Regal ein. Der Schieber ist verfahrbar über mehrere Artikelstapel bzw. Produktstangen auf der Wareneinlagerungseinheit. Die Wareneinlagerungseinheit und die Beschickungseinheit sind auf der Achse 36 senkrecht verfahrbar bis zu einer Höhe von ca. 5,5m. Das Gerät selbst ist schienengebunden, kurvengängig und direkt an den Regalzeilen geführt und kann insbesondere über gesteuerte Weichen in Kurzschlüssen bzw. kurzen Kreisen gefahren werden, dergestalt, daß der gesamte Lagerbereich abgedeckt werden kann. Durch-Erhöhung der Anzahl der Regalbediengeräte kann die gesamte Anlage erweitert werden.

Die Beschickungseinheit besteht im wesentlichen aus zwei Komponenten: Der Entnahme aus dem Regal mittels Schieber und der Beschickung mit einer schwenkbaren Achse 35. Die zu beschickende Höhe bei Schnelldrehautomaten ist ca. 2,5m, d.h. die Beschikkungseinrichtung muß nicht unbedingt bis zum höchsten Regalboden zur Übernahme der Ware fahren. Dies wird durch die Entnahmeeinheit und Abschieben der entnommenen Ware in den Greifer 32 durchgeführt.

Die Auslagerungseinheit positioniert am entsprechenden Regalschacht, löst eine Bremse und übernimmt durch Zurückfahren des Schiebers 9 den Stapel 7 auf die schräge Ebene. Dann fährt diese Einheit in den Bereich der Beschickungseinheit, die vor den Artikelstapel gemäß Fig. 19 positioniert wird. Dieser Artikelstapel wird mit dem Schieber 31 in den Greifer 32 geschoben, der hintere Anschlag wird durch die verschiebbare Platte bzw. den Querschieber 10 hergestellt. Durch diesen Anschlag wird erreicht, daß die Artikelvorderkante bei der Beschickung immer an gleicher Stelle ist, was die Positionierung in den Kanalschacht wesentlich vereinfacht.

Nach Übernahme des Artikelstapels schließt sich der Greifer und schwenkt in Richtung Schnelldrehautomat. Die Achse 35 ist in zwei Richtungen C, D neigbar, d.h. durch Neigen dieser Achse kann sich das Gerät exakt auf die Neigung des Schnelldrehautomaten 2 einstellen, auch wenn er doppelt geneigt ist, d.h. sowohl in Richtung Gasse als auch senkrecht zur Gasse. Dies bringt eine wesentliche Vereinfachung beim Aufsetzen des gegriffenen Artikelstapels auf den schon vorhandenen Artikel, da dann die Bewegung der Achse nur noch einfach linear und somit leicht durchführbar ist.

Der Greifer 32 ist an einer einfach rotatorischen Achse 33 befestigt. Beim Beschicken sind koordinierte Bewegungen im Sinne einer Bahnsteuerung nicht notwendig. Durch die Möglichkeit, die Achse 35, gelagert durch ein Kugelgelenk, am unteren Teil in zwei Richtungen C, D zu schwenken, kann sich das Gerät auf jeden vorhandenen oder zukünftigen Automat einstellen und auch im Mischbetrieb fahren, d.h. in einer Zeile Automaten mit senkrechten oder schrägen Schächten beschicken.

Wenn auch doppelt geneigte Winkelbleche als Unterlage bzw. Ablage von Stapeln besonders vorteilhaft sind, versteht es sich, daß auch eine Einfach-Neigung von Winkelblechen oder eine Horizontalanordnung möglich ist, wenn entsprechende Antriebe und Fixierungshilfen für den Artikelstapel vorgesehen sind.

## Patentansprüche

1. Kommissionieranlage (1) mit zumindest einem Schnelldrehautomaten (2), der zumindest ein Artikelregal (3) mit nebeneinander angeordneten, im wesentlichen senkrechten, leicht geneigten, von vorne zugänglichen Artikelschächten (4) aufweist, in denen zu kommissionierende Artikel gelagert werden können, wobei ein dem Artikelregal zugeordnetes verfahrbares Regalbediengerät (5) bei jedem Artikelschacht (4) positionierbar ist und Artikel in den Artikelschacht einlagert, wobei
das raumbewegliche Regalbediengerät (5) eine Artikelhandhabe-Einheit (6) besitzt, die sorten- bzw. dimensionsgleiche Artikel stapelweise magazinlos einlagert, wobei ein einzulagernder Artikelstapel (7) ohne separates Artikelstapel-Magazin oder -Behältnis durch das Regalbediengerät gleichzeitig gehandhabt wird und die Artikelhandhabe-Einheit (6) eine bodenseitige Artikelstapel-Aufnahme (8), einen verstellbaren Artikelstapel-Längsschieber (9), einen verstellbaren Artikelstapel-Querschieber (10) Zum Einlagern in einen Artikelschacht (4) und eine insbesondere eine Reihe von Federfingern (11) aufweisende verstellbare Artikelstapel-Längsklemmplatte (12) aufweist, welche parallel zur und gegenüber der Artikelstapel-Aufnahme (8) liegt und im eingeklemmten Zustand einen direkt aufgenommenen Artikelstapel (7) durch die Artikelstapel-Längsklemmplatte, insbesondere durch deren Federfinger (11), in Stapelquerrichtung (Q) gegen die Artikelstapel-Aufnahme drückt.

2. Kommissionieranlage nach Anspruch 1,
**dadurch gekennzeichnet,**
**daß** das Regalbediengerät (5) über ein Führungs- bzw. Schienensystem (13) von und zu zumindest einem Vorratsregal verfahrbar und bei einem ausgewählten seitlichen Ende (A) eines Schachts des Vorratsregals, insbesondere eines Winkelblechs (14), positionierbar ist, wobei in jedem ausgewählten Schacht ein einziger zu handhabender Artikelstapel (7) angeordnet ist bzw. werden kann und der Artikelstapel durch Verschieben in Stapelrichtung (S) auf eine ausgerichtete Artikelaufnahme (8) der Artikelhandhabe-Einheit gelangt, oder umgekehrt von der Artikelaufnahme in den ausgewählten Schacht gelangt, wobei das Führungs- bzw. Schienensystem (13) auch Weichen aufweisen kann.

3. Kommissionieranlage nach Anspruch 2,
**dadurch gekennzeichnet,**
**daß** das Vorratsregal ein Übervorratsregal (15) ist, welches dem Schnelldrehautomaten (2) zugeordnet ist und sich vorzugsweise in der Nähe des Artikelregals (3) des Schnelldrehautomaten befindet, und/oder ein Zwischenpuffer (16) ist, welcher dem Wareneingang (E) zugeordnet ist und sich vorzugsweise in der Nähe der Auspackstation befindet, an welcher die Artikelstapel (7) aus einem Überkarton (17) ausgepackt und zusammengestellt werden.

4. Kommissionieranlage nach Anspruch 3,
**dadurch gekennzeichnet,**
**daß** die ausgepackten Artikelstapel (7) auf einer Artikelstapel-Ablage (18) zusammengestellt werden, welche die Form eines Teiles zumindest einer Regalebene des Vorratsregals aufweist, insbesondere Winkelbleche (14) sind, wobei das Regalbediengerät (5) für eine Artikelstapelübernahme durch Verschieben auch zur Artikelstapel-Ablage (18) über das Schienen- bzw. Führungssystem (13) verfahrbar und bei dieser Artikelstapel-Ablage, insbesondere bei einem seitlichen Ende (A) eines Winkelblechs, positionierbar ist, wobei vorzugsweise für eine Positionierung zum Regalbediengerät auch die Artikelstapel-Ablage (18) verschieblich, insbesondere auf einem Förderband oder auf einer Rutsche verschieblich, und/oder um eine Vertikalachse (19) um vorzugsweise 90° oder 180° drehbar ist.

5. Kommissionieranlage nach einem der Ansprüche 2 bis 4,
**dadurch gekennzeichnet,**
**daß** das Vorratsregal in ein oder mehreren übereinander angeordneten Ebenen jeweils nebeneinander angeordnete Winkelbleche (14) besitzt, und jedes Winkelblech (14) doppelt geneigt ist und eine im Querschnitt rechtwinklige und in Längsrichtung schräge Rinne ausbildet, wobei die Winkelwurzel in jedem Längsquerschnitt der Rinne an tiefster Stelle liegt und beide Winkelschenkelflächen Anschlagflächen für einen aufgenommenen Artikelstapel (7) sind, und ferner am tiefsten Rinnenende ein lösbarer, vorzugsweise niederdrückbarer Artikelanschlag (20) vorgesehen ist, wobei gegebenenfalls zwei Vorratsregale ein Doppelregal ausbilden, welche Rücken an Rücken zueinander angeordnet sind.

6. Kommissionieranlage nach Anspruch 5,
**dadurch gekennzeichnet,**
**daß** ein in der Rinne aufgenommener Artikelstapel (7) eine Längsfixierungshilfe aufweist, welche den Artikelstapel gegen den Artikelanschlag (20) drückt, wobei die Längsfixierungshilfe vorzugsweise ein Rollwagen (21), ein längsverstellbarer angetriebener Artikelanschlag oder ein federvorgespannter Artikelanschlag ist.

7. Kommissionieranlage nach einem der Ansprüche 2 bis 6,
**dadurch gekennzeichnet,**
**daß** die Artikelhandhabe-Einheit des Regalbediengeräts einen Andockzapfen (22) besitzt, welcher in eine entsprechende Aussparung bei einem ausgewählten Schacht eines Vorratsregals als Zentrierungshilfe in Eingriff bringbar ist, und vorzugsweise die Artikelhandhabe-Einheit einen Anschlag, insbesondere ein Röllchen (23) besitzt, welcher bzw. welches mit dem Artikelstapel-Anschlag (20) eines Schachts für ein Lösen bzw. Niederdrükken des Artikelstapel-Anschlags in Eingriff bringbar ist, wobei der Anschlag der Artikelhandhabe-Einheit auch der verstellbare Artikelstapel-Längsschieber (9) selbst sein kann.

8. Kommissionieranlage nach einem der Ansprüche 3 bis 7,
**dadurch gekennzeichnet,**
**daß** die Artikelstapel-Aufnahme (8) des Regalbediengeräts (5), die Schacht- bzw. Winkelblechausbildung des Übervorratsregals (15), des Zwischenpuffers (16) und der Artikelstapel-Ablage (18) beim Wareneingang (E) hinsichtlich Länge, Breite und gegebenenfalls Neigung (Längsneigung (a), Querneigung (b)) gleich ausgebildet sind, wobei auch das Übervorratsregal (15) und/oder der Zwischenpuffer (16) unterschiedlich groß sein können, vor allem in der Breite.

9. Kommissionieranlage nach einem der Ansprüche 2 bis 8, **dadurch gekennzeichnet,**
**daß** die Artikelhandhabe-Einheit (6) über eine Schwenkachse (24) auf einem Schlitten (25) befestigt ist, welcher auf einer Querschiene (26) mit einer Neigung (a) der Schachttiefe bzw. Schachtlängsrichtung des Vorratsregals, insbesondere ca. 20°, querverschieblich ist, wobei die Querschiene (26) fest oder teleskopierbar auf einem vertikal verschieblichen Hubschlitten (27) des Regalbediengeräts (5) befestigt ist.

10. Kommissionieranlage nach einem der Ansprüche 3 bis 9,
**dadurch gekennzeichnet,**
**daß** die Artikelhandhabe-Einheit (6) zweigeteilt ist und eine separate höhenverstellbare Artikelstapel-Aufnahmeeinheit (28) mit mehreren Winkelblechen (14) nach Art, Lage und Größe der Artikelstapel-Aufnahme (8) bzw. des Vorratsregals aufweist, welche zumindest einen eigenen verstellbaren zweiten Artikelstapel-Längsschieber (9') besitzt, wobei durch die Artikelstapel-Aufnahmeeinheit (28) mehrere Artikelstapel (7) vom Zwischenpuffer (16) oder von der Artikelstapel-Aufnahme zum Übervorratsregal (15) förderbar sowie ein- und auslagerbar sind, sowie eine separate höhenverstellbare Artikelregal-Beschikkungseinheit (30) aufweist, welche ihrerseits zweigeteilt ist und zum einen eine höhenverstellbaren Einzel-Artikelstapel-Aufnahme (8'), gegebenenfalls mehrere Einzel-Artikelstapel-Aufnahmen, mit dem Artikelstapel-Längsschieber (9) und einem weiteren Artikelstapel-Querschieber (31) und zum anderen eine raumbewegliche Greifereinheit (32) mit der bodenseitigen Artikelstapel-Aufnahme (8), der Artikelstapel-Längsklemmplatte (12) und dem verstellbaren Artikelstapel-Querschieber (10) besitzt, wobei durch die Artikelregal-Beschickungseinheit (30) ein einziger ausgewählter Artikelstapel (7) vom Vorratsregal (Übervorratsregal (15), Zwischenpuffer (16) ) oder von der Artikelstapel-Ablage (18) des Wareneingangs (E) zum Schnelldrehautomaten (2) förderbar und dort in einen ausgewählten im wesentlichen senkrechten Schacht des Artikelregals einlagerbar ist.

11. Kommissionieranlage nach Anspruch 10,
**dadurch gekennzeichnet,**
**daß** für ein Einlagern des Artikelstapels in den Schnelldrehautomaten (2) der Artikelstapel (7) durch die Einzel-Artikelstapel-Aufnahme (8') vom Vorratsregal in Stapellängsrichtung durch Verschieben mit dem Artikelstapel-Längsschieber (9) entnehmbar und zum Schnelldrehautomaten (2) förderbar und nach einem Umsetzen bzw. Querverschieben (V) des Artikelstapels (7) vom der Einzel-Artikelstapel-Aufnahme (8') durch den weiteren Artikelstapel-Querschieber (31) auf die bodenseitige Artikelstapel-Aufnahme (8') der ausgerichteten Greifereinheit (32) und nach einem Festklemmen des gesamten Artikelstapels in Stapelquerrichtung (Q) durch die Federfinger-Längsklemmplatte (12) beim ausgewählten Schacht des Schnelldrehautomaten (2) durch Bewegen der Greifereinheit positionierbar und einlagerbar ist.

12. Kommissionierautomat nach Anspruch 10 oder 11,
**dadurch gekennzeichnet,**
**daß** die Greifereinheit (32) über eine Drehachse (33) an einen höhenverstellbaren Hubschlitten (34) befestigt ist, welcher seinerseits an einer bodenseitig um zwei zueinander senkrechte Achsen (C, D) angelenkte Vertikalstange (35) des Regalbediengeräts (5) höhenverschieblich ist, wobei vorzugsweise die Vertikalstange (35) eine kürzere Länge aufweist als die Vertikalstange (36), an welcher die Einzel-Artikelstapel-Aufnahme (8') und die Artikelstapel-Aufnahmeeinheit (28) höhenverschieblich sind.

13. Kommissionieranlage nach einem der Ansprüche 1 bis 12,
**dadurch gekennzeichnet,**
**daß** für ein Einlagern eines Artikelstapels (7) in den Schnelldrehautomaten (2) nach einem Positionieren der Artikelstapel-Handhabeeinheit (6) vor dem ausgewählten Schacht des Artikelregals (3) der Artikelstapel im geklemmten Zustand durch den Artikelstapel-Querschieber (10) in den Schacht gegebenenfalls auf den dort befindlichen obersten Artikel abgegeben wird.

14. Kommissionieranlage nach einem der Ansprüche 3 bis 13,
**dadurch gekennzeichnet,**
**daß** zumindest ein separates Regalbediengerät vorgesehen ist, welches der Artikelstapel-Ablage (18) am Wareneingang (E), dem/den Zwischenpuffer(n) (16) und/oder dem/den Übervorratsregal(en) zugeordnet bzw. dort verfahrbar ist und Artikelstapel (7) dort übernehmen oder übergeben kann, wobei das separate Regalbediengerät ausschließlich eine Artikelstapel-Aufnahme (8'), vorzugsweise eine Mehrfachlastaufnahme für mehrerere Artikelstapel (7), besitzt (d.h. nicht eine Artikelregal-Beschickungseinheit (30) besitzt, welche dem Schnelldrehautomaten zugeordnet ist), und gegebenenfalls das separate Regalbediengerät auch in einer nicht gattungsgemäßen Kommissionieranlage betrieben werden kann.

15. Verfahren zum Bereitstellen und Einlagern von Artikeln in einer Kommissionieranlage (1) mit zumindest einem Schnelldrehautomaten (2), der zumindest ein Artikelregal (3) mit nebeneinander angeordneten, im wesentlichen senkrechten, leicht geneigten, von vorne zugänglichen Artikelschächten (4) aufweist, in denen zu kommissionierende Artikel gelagert werden können, wobei zumindest ein dem Artikelregal zugeordnetes verfahrbares Regalbediengerät (5) bei jedem Artikelschacht (4) positionierbar ist und Artikel in den Artikelschacht einlagern kann, bei einem Betrieb einer Kommissionieranlage nach einem der Ansprüche 1 bis 14, wobei
durch das raumbewegliche Regalbediengerät (5) sorten- bzw. dimensionsgleiche Artikel von einem Vorratsregal oder von einer Artikelstapel-Ablage beim Wareneingang in einem dort vorgepackten Stapel im wesentlichen durch Horizontalverschiebung des Artikelstapels in Stapellängsrichtung, vorzugsweise in Längsrichtung leicht nach unten zum Regalbediengerät hin geneigt und in Querrichtung leicht seitlich gegen einen Anschlag geneigt, entnommen (und gegebenenfalls bei einem anderen Vorratsregal wieder eingelagert) werden, und daß der entnommene Artikelstapel durch das Regelbediengerät im wesentlichen in horizontaler Anordnung auf dem Regalbediengerät zum Schnelldrehautomaten (2) verfahren und vor einem (Vertikal-)Positionieren eines Artikel-Stapels bei einem ausgewählten Artikelschacht (4) der Artikelstapel (7) direkt in einer Artikelstapel-Handhabeeinheit (6) des Regalbediengeräts in Stapelquerrichtung festklemmt wird, und schließlich nach einem Positionieren in der Aufsetzstellung in einem ausgewählten Schacht (4) des Schnelldrehautomaten der festgeklemmte Artikelstapel (7) aus der Festklemmung gelöst oder herausgedrückt wird.

## Claims

1. A commissioning system (1) with at least one high-speed automatic turning unit (2), which comprises at least one article shelf (3) with article shafts (4), which are adjacently and essentially vertically arranged in a slightly slanted manner, and which can be accessed from the front, and articles which are to be commissioned can be stored in said article shafts, whereby a shelf control unit (5) which can travel and which is assigned to the article shelf can be positioned at each article shaft (4) and stores articles in said article shaft, whereby the spatially moveable shelf control unit (5) is equipped with an article handling unit (6), which stores the articles of the same type or dimensions in a stacked manner without the use of a magazine, whereby an article stack (7), which is to be stored is simultaneously handled without a separate article stack magazine or receptacle by the shelf control unit and said article-handling unit (6) has a bottom-side stack-of-articles pick-up (8), an adjustable longitudinal stack-of-articles pusher (9), an adjustable transverse stack-of-articles pusher (10) for storage in an article shaft (4) and especially an adjustable longitudinal stack-of-articles clamping plate (12) provided with a row of spring-tensioned fingers (11), said clamping plate being located in parallel and opposite said stack-of-articles pick-up (8) and pushes, in a clamped state, the stack of articles (7) picked up directly by said longitudinal stack-of-articles clamping plate especially with said spring-tensioned fingers (11) of said clamping plate, in a transverse direction of the stack of articles (Q) against the stack-of-articles pick-up.

2. A commissioning system in accordance with claim 1,
**characterized by** the fact,
that the shelf control unit (5) can travel by means of a guide or rail system (13) from and to at least one supply bay and can be positioned at a selected lateral end (A) of a shaft of said supply bay, especially of an angle sheet iron (14), whereby a single stack of articles (7) to be handled is or can be arranged in each selected shaft and the stack of articles reaches an aligned article pick-up (8) of said article-handling unit by being displaced in a direction (S) of the stack or conversely it reaches the selected shaft from the article pick-up, whereby the guide or rail system (13) may also have switches.

3. A commissioning system in accordance with claim 2,
**characterized by** the fact,
that said supply bay is a higher-level supply bay (15), which is associated with said high-speed automatic turning unit (2) and is preferably located in the vicinity of said article shelf (3) of said high-speed automatic turning unit, and/or is an intermediate buffer (16), which is associated with the acceptance department (E) and is preferably located in the vicinity of an unpacking station, at which the stacks of articles (7) are unpacked from a collective box (17) and are put together.

4. A commissioning system in accordance with claim 3,
**characterized by** the fact,
that the unpacked stacks of articles (7) are put together on a stack-of-articles stacker plate (18), which has the shape of part of at least one bay level of the supply bay, and is formed especially by said angle sheet irons (14), whereby said shelf control unit (5) can also be moved to the stack-of-articles stacker plate (18) by means of said guide or rail system (13) by displacement for taking over the stack of articles and can be positioned at the stack-of-articles stacker plate, especially at a lateral end (A) of one of the angle sheet irons, whereby the stack-of-articles stacker plate (18) is preferably also displaceable for positioning at the shelf control unit, especially on a conveyor belt or on a chute, and/or it can be rotated around a vertical axis (19) preferably by 90° or 180 °.

5. A commissioning system in accordance with one of the claims 2 to 4,
**characterized by** the fact,
that said supply bay has said angle sheet irons (14) arranged next to one another in one or several planes arranged one on top of another, and each said angle sheet iron (14) is sloped doubly and forms a groove, which has a rectangular cross section and is oblique in a longitudinal direction, whereby the root of the angle is located at the deepest point in each longitudinal cross section of the groove and both surfaces of legs of the angle are stop faces for a picked-up stack of articles (7), and ,furthermore, a detachable, preferably depressible article stop (20) is provided at the deepest end of the groove, whereby two supply bays optionally form a double bay, which are arranged back to back to one another.

6. A commissioning system in accordance with claim 5,
**characterized by** the fact,
that a stack of articles (7) picked up in the groove has a longitudinal fixing aid, which pushes the stack of articles against the article stop (20), whereby the longitudinal fixing aid is preferably one of a rolling chart (21), a longitudinally adjustable, driven article stop or a spring-pretensioned article stop.

7. A commissioning system in accordance with one of the claims 2 to 6,
**characterized by** the fact,
that said article-handling unit of said shelf control unit has a coupling pin (22), which can be caused to engage as a centering aid in a corresponding recess at a selected shaft of a supply bay, and said article-handling unit preferably has a stop, especially comprising a small roller (23), which can be caused to engage with the stack-of-article stop (20) of a shaft for releasing or depressing the stack-of-article stop, whereby the stop of the article-handling unit may also be the adjustable longitudinal stack-of-articles pusher (9) itself.

8. A commissioning system in accordance with one of the claims 3 to 7,
**characterized by** the fact,
that said stack-of-articles pick-up (8) of said shelf control unit (5), said shaft and/or angle sheet iron formation of said higher-level supply bay (15), said intermediate buffer (16) and said stack-of-articles stacker plate (18) at the acceptance department (E) have the same design in terms of length, width and optionally slope (longitudinal slope (a), transverse slope (b)), whereby also the higher-level supply bay (15) and/or the intermediate buffer (16) may be different in size, above all in width.

9. A commissioning system in accordance with one of the claims 2 to 8,
**characterized by** the fact,
that said article-handling unit (6) is fastened via a pivot axis (24) to a carriage (25), said carriage being transversely displaceable on a transverse rail (26) with a slope (a) of the shaft depth or in the longitudinal direction of the shaft of the supply bay, equaling approx. 20°, whereby said transverse rail (26) is fixedly or telescopically fastened to a vertically displaceable lifting carriage (27) of said shelf control unit (5).

10. A commissioning system in accordance with one of the claims 3 to 9,
**characterized by** the fact,
that said article-handling unit (6) is a two-part unit and has a separate, vertically adjustable stack-of-articles pick-up unit (28) with a plurality of said angle sheet irons (14) according to type, location and size of said stack-of-articles pick-up (8) and of said supply bay, which has at least one said own adjustable second longitudinal stack-of-articles pusher (9'), whereby a plurality of said stacks of articles (7) can be delivered by said stack-of-articles pick-up unit (28) from the intermediate buffer (16) or said stack-of-articles pick-up to the higher-level supply bay (15) and can be loaded and removed as well, and it has a separate, vertically adjustable article shelf loading unit (30), which is in turn a two-part unit and has, on the one hand, a vertically adjustable single stack-of-articles pick-up (8'), optionally a plurality of single stack-of-articles pick-ups, with the longitudinal stack-of-articles pusher (9) and with a further said transverse stack-of-articles pusher (31) and, on the other hand, a spatially movable gripping unit (32) with the bottom-side stack-of-articles pick-up (8), the longitudinal stack-of-articles clamping plate (12) and with the adjustable transverse stack-of-articles pusher (10), whereby a single selected stack of articles (7) can be delivered by the article shelf loading unit (30) from the supply bay (higher-level supply bay (15), intermediate buffer (16)) or from the stack-of-articles stacker plate (18) of the acceptance department (E) to the high-speed automatic turning unit and can be loaded into a selected, essentially vertical shaft of the article shelf there.

11. A commissioning system in accordance with claim 10,
**characterized by** the fact,
that for loading the stack of articles into the high-speed automatic turning unit (2), the stack of articles (7) can be removed by an individual stack-of-articles pick-up (8') from the supply bay in a longitudinal direction of the stack by displacement with the longitudinal stack-of-articles pusher (9) and can be delivered to the high-speed automatic turning unit (2) and, after transfer or said transverse displacement (V) of the stack of articles (7) from the individual stack-of-articles pick-up (8') by the additional transverse stack-of-articles pusher (31) to the bottom-side stack-of-articles pick-up (8') of the aligned gripping unit (32) and after clamping the entire stack of articles in the transverse direction of the stack (Q) by the longitudinal clamping plate provided with spring-tensioned fingers (12) at the selected shaft of the high-speed automatic turning unit (2), it can be positioned and loaded by the movement of the gripping unit.

12. A commissioning system in accordance with claim 10 or 11,
**characterized by** the fact,
that said gripping unit (32) is fastened via an axis of rotation (33) at a vertically adjustable lifting carriage (34), which is in turn vertically displaceable on a vertical bar (35) of the shelf control unit (5), which said vertical bar is articulated on a bottom side around two said axes (C, D), which are at right angles to one another, whereby the vertical bar (35) preferably has a shorter length than the vertical bar (36), on which the individual stack-of-articles pick-up (8') and the stack-of-articles pick-up unit (28) are vertically displaceable.

13. A commissioning system in accordance with one of the claims 1 to 12,
**characterized by** the fact,
that for loading a stack of articles (7) into the high-speed automatic turning unit (2) after the positioning of the stack-of-articles handling-unit (6) before the selected shaft of the article shelf (3), the stack of articles is released in the clamped state by the transverse stack-of-articles pusher (10) into the shaft, optionally onto the topmost article present there.

14. A commissioning system in accordance with one of the claims 3 to 13,
**characterized by** the fact,
that at least one separate shelf control unit is provided, which is associated with the stack-of-articles stacker plate (18) at the acceptance department (E), with the intermediate buffer/s (16) and/or with the higher-level supply bay/s and is displaceable there and can take over or deliver said stacks of articles (7) there, whereby the separate shelf control unit exclusively has a stack-of-articles pick-up (8'), preferably a multiple load pick-up means for a plurality of said stacks of articles (7), (i.e. does not have an article shelf loading unit (30), which is associated with the high-speed automatic turning unit), and the separate shelf control unit optionally may also be operated in a commissioning system not belonging to this type.

15. A process for providing and loading articles in a commissioning system (1) with at least one high-speed automatic turning unit (2) having at least one article shelf (3) with essentially vertical, slightly sloping article shafts (4) arranged next to one another, the article shafts (4) being accessible from a front side and defining spaces in which articles to be commissioned can be stored, whereby at least a traveling shelf control unit (5) associated with the article shelf, which can be positioned at each article shaft (4) and can load articles into the article shaft during an operation of a commissioning system in accordance with one of the claims 1 to 14, whereby articles of the same brand and size are removed with the spatially movable shelf control unit (5) from a supply bay or from a stack-of-articles stacker plate at the acceptance department in a stack pre-packed there essentially by the horizontal displacement of the stack of articles in the longitudinal direction of the stack, preferably gently sloping downward in the longitudinal direction, toward the shelf control unit and gently sloping laterally in the transverse direction against a stop (and optionally loaded into another supply bay again), and the stack of articles removed by said shelf control unit is transferred essentially in horizontal arrangement on the shelf control unit to the high-speed automatic turning unit (2), and the stack of articles (7) is clamped in the transverse direction of the stack directly in a stack-of-articles handling unit (6) of the shelf control unit before a (vertical) positioning of a stack of articles at a selected article shaft (4), and finally after positioning in a deposition position, the clamped stack of articles (7) is released from or pushed out of the clamped stack of articles of the clamping in a selected shaft (4) of the high-speed automatic turning unit.

## Revendications

1. Installation d'emmagasinement (1) comportant au moins un tour à grande vitesse (2) présentant au moins un rayonnage (3) comportant des casiers (4) disposés côte à côte, pour l'essentiel verticaux, légèrement inclinés, accessible par l'avant, dans lesquels les articles à emmagasiner peuvent être entreposés, cette installation d'emmagasinement comportant un transstockeur mobile (5) affecté au rayonnage et pouvant être positionné auprès de chaque casier (4) et pouvant emmagasiner des articles dans chaque casier, et ce transstockeur mobile dans l'espace (5) comportant une unité de manutention (6), qui emmagasine des articles de même genre ou dimension, empilés sans magasins, une pile d'articles à emmagasiner (7) étant manutentionnée en une fois, sans magasin séparé pour piles d'articles, ni récipient, par le transstockeur et cette unité de manutention (6) présentant du côté du fond un réceptacle pour piles d'articles (8), un coulisseau longitudinal ajustable pour piles d'articles (9) un coulisseau transversal ajustable pour piles d'articles (10) pour l'emmagasinement dans un casier (4) et en particulier une rangée de doigts à ressort (11), qui présente un crapaud longitudinal pour fixer la pile (12), disposé parallèlement à et face au réceptacle pour piles d'articles (8) et qui, dans l'état de blocage, pousse une pile d'articles (7) ramassée directement à l'aide du crapaud longitudinal, en particulier par les doigts à ressort (11) de celui-ci, dans le sens de la pile (Q) contre le réceptacle pour piles d'articles.

2. Installation d'emmagasinement selon la revendication 1,
**caractérisée par le fait que** le transstockeur (5) peut être déplacé depuis et vers au
moins un rayonnage au moyen d'un système de guidage ou de rails (13) et être positionné auprès de l'une des extrémités latérales choisies (A) d'un casier du rayonnage, en particulier au niveau d'un gousset (14), une seule pile des articles à manutentionner (7) étant rangée ou pouvant être rangée dans chaque casier sélectionné et la pile d'articles aboutissant par déplacement dans le sens de la pile (S) sur un réceptacle pour articles (8) de l'unité de manutention ou, au contraire aboutissant à partir du réceptacle pour articles dans le casier sélectionné, le système de guidage ou de rail (13) pouvant aussi présenter des aiguillages.

3. Installation d'emmagasinement selon la revendication 2,
**caractérisée par le fait que** le rayonnage de stockage est un rayonnage de sur-stockage (15), qui est associé au tour à grande vitesse (2) et se trouve de préférence à proximité du rayonnage (3) du tour à grande vitesse, et/ou constitue une réserve tampon (16), disposé en direction de l'arrivée de la marchandise (E) et se trouvant de préférence à proximité du poste de déballage où les piles d'articles (7) sont déballées d'un carton extérieur (17) et sont rassemblées.

4. Installation d'emmagasinement selon la revendication 3,
**caractérisée par le fait que** les piles d'articles (7) sont rassemblées sur une table pour piles d'articles (18), ayant la forme d'une partie du moins d'un des niveaux du rayonnage de stockage, et en particulier présentant de goussets (14), le transstockeur (5) pouvant être, pour réceptionner une pile d'articles, déplacé aussi en direction de la table pour piles d'articles (18) par le système de guidage ou de rails (13) et être positionné auprès de la table pour piles d'articles, en particulier au niveau d'une extrémité latérale (A) d'un gousset, la table pour piles d'articles (18) pouvant être de préférence, elle aussi, déplacée vers le transstockeur pour le positionnement en particulier sur un ruban transporteur ou un glissoir, et/ou pouvant pivoter autour d'un axe vertical (19) de préférence de 90° ou de 180°.

5. Installation d'emmagasinement selon l'une des revendications de 2 à 4,
**caractérisée par le fait que** le rayonnage dispose de goussets disposés à un ou plusieurs niveaux superposés, à chaque fois disposés côte à côte (14), et que chaque gousset (14) est incliné et forme une rainure orthogonale dans la section transversale et oblique dans le sens longitudinal, le sommet de l'angle du gousset se trouvant plus bas dans chaque section transversale et longitudinale de la rainure et les deux faces, qui forment les côtés du gousset, servant de butée pour les piles d'articles (7) réceptionnées, et de plus, à l'extrémité la plus basse de la rainure, une butée pour les articles escamotable (20), pouvant de préférence être poussée vers le bas, étant prévue, le cas échéant deux rayonnages disposés dos à dos l'un par rapport à l'autre constituant un rayonnage double.

6. Installation d'emmagasinement selon la revendication 5,
**caractérisée par le fait qu'**une pile d'articles (7) réceptionnée dans la rainure présente un auxiliaire de fixation longitudinal, qui appuie la pile d'articles contre la butée pour articles (20), l'auxiliaire de fixation longitudinal, de préférence un chariot roulant (21), étant une butée pour articles ajustable longitudinalement et mue ou une butée pour article à ressort pré-tendu.

7. Installation d'emmagasinement selon l'une des revendications de 2 à 6,
**caractérisée par le fait que** l'unité de manutention du transstockeur possède un tenon d'amarrage (22), qui peut être mis en prise avec une mortaise correspondante au niveau d'un casier sélectionné d'un rayonnage comme auxiliaire de centrage, et que l'unité de manutention possède de préférence une butée, en particulier une roulette (23), laquelle ou lequel peut être mis en prise avec la butée pour pile d'articles (20) d'un casiers pour libérer ou pousser vers le bas la butée pour la pile d'article, la butée de l'unité de manutention pouvant aussi être coulisseau longitudinal pour piles d'articles (9) elle-même.

8. Installation d'emmagasinement selon l'une des revendications 3 à 7,
**caractérisée par le fait que** le réceptacle pour piles d'articles (8) du transstockeur (5), la forme du casier ou du gousset du rayonnage de sur-stockage (15), de la réserve tampon (16) et de la table pour piles d'articles (18) sont réalisés, lors de l'arrivée des marchandises (E), de manière identique en ce qui concerne la longueur, la largeur et, le cas échéant l'inclinaison, (inclinaison longitudinale (a), inclinaison transversale (b)), les rayonnages de sur-stockage (15) et/ou la réserve tampon (16) pouvant avoir des tailles différentes surtout en largeur.

9. Installation d'emmagasinement selon l'une des revendications 2 à 8,
**caractérisée par le fait que** l'unité de manutention (6) est fixée par un axe pivotant (24) sur un chariot (25), qui peut être déplacé sur un rail transversal (26) ayant une inclinaison (a) dans le sens de la profondeur du casier ou de la longueur du casier des rayonnages, en particulier d'env. 20°, le rail transversal (26) étant fixe de manière fixe ou télescopique sur un chariot élévateur déplaçable (27) du transstockeur (5).

10. Installation d'emmagasinement selon l'une des revendications de 3 à 9,
**caractérisée par le fait que** l'unité de manutention (6) est constituée de deux parties et présente une unité de réception des piles d'articles distincte ajustable en hauteur (28) ayant plusieurs goussets (14) selon le genre, la position et la taille du réceptacle pour piles d'articles (8) ou du rayonnage, qui possède au moins un deuxième propre coulisseau longitudinal ajustable pour piles d'articles (9'), plusieurs piles d'articles (7) pouvant être transportées, grâce à l'unité de réception de piles d'articles (28), de la réserve tampon (16) ou du réceptacle pour piles d'articles au rayonnage de sur-stockage (15) et pouvant être chargées ou déchargées, ainsi que présente une unité d'approvisionnement des rayonnages séparée et ajustable en hauteur (30), laquelle est, elle-même, constituée de deux parties et possède d'une part un réceptacle pour piles d'articles ajustable en hauteur (8'), le cas échéant des réceptacles pour pile d'articles particuliers, ayant un coulisseau longitudinal ajustable pour piles d'articles (9) et un autre coulisseau transversal pour piles d'articles (31) et présente, d'autre part, une unité à griffe mobile dans l'espace (32) possédant du côté du fond le réceptacle pour piles d'articles (8), le crapaud longitudinal ajustable (12), le crapaud transversal ajustable (10), une seule pile d'articles sélectionnée (7) pouvant être transportée, par l'unité d'approvisionnement des rayonnages (30), du rayonnage (rayonnage de sur-stockage (15), réserve tampon (16) ) ou à partir du rayonnage pour piles d'articles (18) de l'arrivée des marchandises (E) vers le tour à grande vitesse (2) et pouvant être emmagasinée là dans un casier du rayonnage pour l'essentiel vertical.

11. Installation d'emmagasinement selon la revendication 10,
**caractérisée par le fait que**, pour un emmagasinement de la pile d'articles dans le tour à grande vitesse (2), la pile d'article (7) peut être prise par le réceptacle pour piles d'articles isolées (8') du rayonnage dans le sens de la longueur de la pile en le poussant avec le coulisseau longitudinal (9) et être déplacé vers le tour à grande vitesse (2) et peut être, après un déplacement ou déplacement transversal (V) de la pile d'articles (7) du réceptacle pour piles d'articles isolées (8') par l'autre coulisseau transversal pour piles d'articles (31) sur le réceptacle pour piles d'articles situé du côté du fond (8') de l'unité à griffes positionnée (32) et après avoir fixé toute la pile d'articles dans le sens transversal de la pile (Q), positionnée et emmagasinée par les doigts à ressort du crapaud longitudinal (12) dans le casier du tour à grande vitesse (2) par un mouvement de l'unité à griffe.

12. Installation d'emmagasinement selon la revendication 10 ou 11,
**caractérisée par le fait que** l'unité à griffes (32) est fixée, par un axe de rotation (33), à un chariot élévateur ajustable en hauteur (34), qui peut lui-même être déplacé en hauteur le long d'une barre verticale (35) articulée du côté du fond du transstockeur (5) autour de deux axes perpendiculaires l'un à l'autre (C, D), la barre verticale articulée (35) présentant de préférence une longueur plus courte que la barre verticale (36)_{,} le long de laquelle le réceptacle pour piles d'articles isolées (8') et l'unité de réceptacles pour piles d'articles (28) peuvent se déplacer en hauteur.

13. Installation d'emmagasinement selon l'une des revendications de 1 à 12,
**caractérisée par le fait que**, pour emmagasiner une pile d'articles (7) dans le tour à grande vitesse (2) après le positionnement de l'unité de manutention de piles d'articles (6) devant le casier sélectionné du rayonnage (3), la pile d'articles est, dans un état calé, mis, par le coulisseau transversal pour piles d'articles (10), dans le casier et le cas échéant sur l'article du dessus s'y trouvant.

14. Installation d'emmagasinement selon une des revendications de 3 à 13,
**caractérisée par le fait qu'**au moins un transstockeur séparé est prévu, lequel est attribué à la table pour piles d'articles (18) à l'entrée de marchandise (E), au/aux stock(s) tampon(s) (16) et/ou au/aux rayonnage(s) de sur-stockage ou bien peut s'y rendre et là peut prendre en charge ou déposer des piles d'articles (7), le transstockeur séparé possédant exclusivement un réceptacle pour piles d'articles (8'), de préférence un réceptacle multiple pour plusieurs piles d'articles (7), (c.-à-d. pas une unité d'approvisionnement des rayonnages (30), qui soit attribuée au tour à grande vitesse), et le cas échéant le transstockeur séparé pouvant également être utilisé dans une installation d'emmagasinement qui ne soit pas de la même espèce.

15. Transport pour l'approvisionnement et l'emmagasinement d'articles dans une installation d'emmagasinement (1) comportant au moins un tour à grande vitesse (2) présentant à au moins un rayonnage (3) comportant des casiers (4) disposés côte à côte, pour l'essentiel verticaux, légèrement inclinés, accessible par l'avant, dans lesquels les articles à emmagasiner peuvent être entreposés, au moins un des transstockeur mobile affecté au rayonnage pouvant être positionné auprès de chaque casier (4) et pouvant emmagasiner des articles dans chaque casier, lors de l'utilisation d'une installation d'emmagasinement selon une des revendications de 1 à 14, des articles de même genre ou dimension pouvant être pris, par le transstockeur mobile dans l'espace (5), d'un rayonnage ou d'une table pour piles d'articles à l'entrée des marchandises dans une pile préparée là-bas, et ce essentiellement par déplacement horizontal de la pile d'articles dans le sens longitudinal de la pile, de préférence légèrement incliné dans le sens longitudinal vers le bas vers le transstockeur et légèrement inclinée dans le sens transversal vers une butée, (et le cas échéant pouvant être réemmagasinée dans un autre rayonnage), et la pile d'articles prise étant déplacée, par le transstockeur, pour l'essentiel de manière horizontale sur le transstockeur vers le tour à grande vitesse (2) et la pile d'articles (7) étant calée, avant le positionnement (vertical) d'une pile d'articles auprès d'un casier (4) sélectionné, directement dans une unité de manutention de piles d'articles (6) du transstockeur dans le sens de la pile, et finalement, la pile d'articles calée (7) étant, après une mise dans la position dans laquelle elle sera déposée dans casier sélectionné (4) du tour à grande vitesse étant libérée du calage ou expulsée.
